(19) **Europäisches Patentamt**
**European Patent Office**
**Office européen des brevets**

(11) **EP 3 404 796 A1**

(12) **EUROPEAN PATENT APPLICATION**
published in accordance with Art. 153(4) EPC

(43) Date of publication:
**21.11.2018 Bulletin 2018/47**

(51) Int Cl.:
**H02J 7/02** (2016.01)  **H02J 7/00** (2006.01)
**H02J 5/00** (2016.01)

(21) Application number: **16885239.0**

(22) Date of filing: **30.11.2016**

(86) International application number:
**PCT/KR2016/013933**

(87) International publication number:
**WO 2017/122928 (20.07.2017 Gazette 2017/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.01.2016 KR 20160004995**
**14.01.2016 KR 20160004997**

(71) Applicant: **LG Innotek Co., Ltd.**
**Seoul 04637 (KR)**

(72) Inventors:
• **KWON, Yong Il**
**Seoul 04637 (KR)**
• **YOO, Dong Han**
**Seoul 04637 (KR)**
• **LEE, Jae Kyu**
**Seoul 04637 (KR)**

(74) Representative: **DREISS Patentanwälte PartG mbB**
**Friedrichstraße 6**
**70174 Stuttgart (DE)**

(54) **WIRELESS POWER CONTROL METHOD AND DEVICE THEREFOR**

(57) The present invention relates to a wireless power control method and a device therefor, and according to one embodiment of the present invention, a wireless power control method of a wireless power transmitter capable of wirelessly charging a plurality of wireless power receivers simultaneously can comprise the steps of: selecting a dominant receiver on the basis of state information received from the plurality of wireless power receivers; controlling power for the dominant receiver; and selecting a new dominant receiver on the basis of a power reception state change of the dominant receiver according to the power control.

FIG. 10

## Description

[Technical Field]

Embodiments relate to wireless charging technology, and more particularly, to a wireless power control method and a device therefor in a wireless power transmission apparatus capable of wireless power transmission to a plurality of wireless power reception apparatuses.

[Background Art]

Recently, as information and communication technology rapidly develops, a ubiquitous society based on information and communication technology is being formed.

In order for information communication devices to be connected anywhere and anytime, sensors equipped with a computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. In the 1800s, an electric motor or a transformer based on the electromagnetic induction principle began to be used. Thereafter, a method of transmitting electric energy by radiating an electromagnetic wave such as a radio wave or laser was tried. Electric toothbrushes and some wireless shavers are charged through electromagnetic induction.

Wireless energy transmission schemes known up to now may be broadly classified into electromagnetic induction, electromagnetic resonance, and RF transmission using a short-wavelength radio frequency.

In the electromagnetic induction scheme, when two coils are arranged adjacent to each other and current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic wave. However, this scheme may be used only at a limited distance and in a limited space, and has somewhat low energy transfer efficiency.

The short-wavelength wireless power transmission scheme (simply, RF transmission scheme) takes advantage of the fact that energy can be transmitted and received directly in the form of radio waves. This technology is an RF power transmission scheme using a rectenna. A rectenna, which is a compound of antenna and rectifier, refers to a device that converts RF power directly into direct current (DC) power. That is, the RF method is a technology for converting AC radio waves into DC waves. Recently, with improvement in efficiency, commercialization of RF technology has been actively researched.

The wireless power transmission technology is applicable to various industries including IT, railroads, and home appliance industries as well as the mobile industry.

Particularly, in recent years, research has been actively conducted on a wireless power transmission apparatus that transmits power to a plurality of wireless power reception apparatuses simultaneously.

Particularly, there is a need for research on an efficient power control method for a plurality of wireless power reception apparatuses connected to one wireless power transmission apparatus.

[Disclosure]

[Technical Problem]

Therefore, the present disclosure has been made in view of the above problems, and embodiments provide a wireless power transmission method and a device therefor in a wireless charging system capable of wireless power transmission to a plurality of wireless power reception apparatuses.

Further, embodiments provide a wireless power control method in a wireless power transmission apparatus capable of supplying power to a plurality of wireless power reception apparatuses through one transmission coil.

Further, embodiments provide a wireless power control method capable of dynamically selecting a power control algorithm according to a power reception state of a wireless power reception apparatus and a device therefor.

Further, embodiments provide a wireless power control method capable of maximizing power transmission efficiency as well as minimizing device damage caused by overheating and overvoltage and a device therefor.

Further, embodiments provide a wireless power control method capable of dynamically selecting an algorithm or procedure to be used for reselection of a dominant receiving unit based on a predefined priority when a plurality of events for reselection of the dominant receiving unit occurs, and a device therefor.

The technical objects that can be achieved through the embodiments are not limited to what has been particularly described hereinabove and other technical objects not described herein will be more clearly understood by persons skilled in the art from the following detailed description.

[Technical Solution]

Embodiments may provide a wireless power control method and a device therefor.

In one embodiment, a method of controlling wireless power in a wireless power transmitter capable of simultaneously performing wireless charging of a plurality of wireless power receivers may include selecting a dominant receiver based on state information received from the plurality of wireless power receivers, performing power control on the dominant receiver, and selecting a new dominant receiver based on change in a power reception state of the dominant receiver according to the power control.

In another embodiment, a method of controlling wireless power in a wireless power transmitter capable of simultaneously performing wireless charging of a plurality of wireless power receivers may include determining whether dominant receiver reselection is necessary based on the state information received from the plurality of wireless power receivers, selecting an algorithm to be used for the dominant receiver reselection when the reselection is necessary as a result of the determination, and selecting a new dominant receiver according to the selected algorithm and performing power control on the selected new dominant receiver

In yet another embodiment, there may be provided a program for executing one of the wireless power transmission methods and a computer-readable recording medium having the program recorded thereon.

[Advantageous Effects]

The method and device according to the embodiments have the following effects.

Embodiments may provide a wireless power transmission method and a device therefor in a wireless charging system capable of wireless power transmission to a plurality of wireless power reception apparatuses.

In addition, embodiments may provide a wireless power control method in a wireless power transmission apparatus capable of supplying power to a plurality of wireless power reception apparatuses through one transmission coil.

Further, embodiments may provide a wireless power control method capable of dynamically selecting a power control algorithm according to a real-time power reception state of a wireless power reception apparatus and a device therefor.

Further, embodiments may provide a wireless power control method capable of maximizing power transmission efficiency as well as minimizing device damage caused by overheating and overvoltage and a device therefor.

Further, embodiments may provide a wireless power control method capable of dynamically selecting an algorithm or procedure to be used for reselection of a dominant receiving unit based on a predefined priority when a plurality of events for reselection of the dominant receiving unit occurs, and a device therefor.

It will be appreciated by those skilled in the art that that the effects that can be achieved through the embodiments of the present disclosure are not limited to those described above and other advantages of the present disclosure will be more clearly understood from the following detailed description.

[Description of Drawings]

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 is a system configuration diagram illustrating a wireless power transmission method using an electromagnetic resonance scheme according to an embodiment of the present disclosure;
FIG. 2 is a diagram illustrating a type and characteristics of a wireless power transmitter in an electromagnetic resonance scheme according to an embodiment of the present disclosure;
FIG. 3 is a diagram illustrating a type and characteristics of a wireless power receiver in an electromagnetic resonance scheme according to an embodiment of the present disclosure;
FIG. 4 shows equivalent circuit diagrams of a wireless power transmission system in an electromagnetic resonance scheme according to an embodiment of the present disclosure;

FIG. 5 is a state transition diagram illustrating a state transition procedure of a wireless power transmitter in an electromagnetic resonance scheme according to an embodiment of the present disclosure;

FIG. 6 is a state transition diagram illustrating a state transition procedure of a wireless power receiver in an electromagnetic resonance scheme according to an embodiment of the present disclosure;

FIG. 7 illustrates operation regions of a wireless power receiver according to $V_{RECT}$ in an electromagnetic resonance scheme according to an embodiment of the present disclosure;

FIG. 8 is a configuration diagram of a wireless power transmission system according to an embodiment of the present disclosure;

FIG. 9 is a flowchart illustrating a wireless charging procedure according to an embodiment of the present disclosure;

FIG. 10 is a diagram illustrating an algorithm for selecting a dominant power receiving unit according to an embodiment of the present disclosure;

FIGs. 11 to 13 are flowcharts illustrating a method of selecting a dominant receiving unit for wireless power control in a wireless power transmitter according to an embodiment of the present disclosure; and

FIG. 14 is a flowchart illustrating a method of selecting a dominant receiving unit based on priorities by a wireless power transmitter according to an embodiment of the present disclosure.

[Best Mode]

Embodiments relate to a wireless power transmission method and a device therefor in a wireless charging system capable of transmitting wireless power to a plurality of wireless power reception apparatuses. The wireless power control method in a wireless power transmitter capable of simultaneous wireless charging of a plurality of wireless power receivers may include selecting a dominant receiving unit based on state information received from the plurality of wireless power receivers, performing power control for the dominant receiving unit, and selecting a new dominant receiving unit based on change in power reception state of the dominant receiving unit according to the power control.

[Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

While all elements constituting embodiments of the present disclosure are described as being connected into one body or operating in connection with each other, the disclosure is not limited to the described embodiments. That is, within the scope of the present disclosure, one or more of the elements may be selectively connected to operate. In addition, although all elements can be implemented as one independent hardware device, some or all of the elements may be selectively combined to implement a computer program having a program module for executing a part or all of the functions combined in one or more hardware devices. Code and code segments that constitute the computer program can be easily inferred by those skilled in the art. The computer program may be stored in a computer-readable storage medium, read and executed by a computer to implement an embodiment of the present disclosure. The storage medium of the computer program may include a magnetic recording medium, an optical recording medium, and a carrier wave medium.

In the description of the embodiments, it is to be understood that when an element is described as being "on" or "under" and "before" or "after" another element, it can be "directly" "on" or "under" and "before" or "after" another element or can be "indirectly" formed such that one or more other intervening elements are also present between the two elements.

The terms "include," "comprise" and "have" should be understood as not precluding the possibility of existence or addition of one or more other components unless otherwise stated. All terms, including technical and scientific terms, have the same meaning as commonly understood by one of ordinary skill in the art to which this disclosure pertains, unless otherwise defined. Commonly used terms, such as those defined in typical dictionaries, should be interpreted as being consistent with the contextual meaning of the relevant art, and are not to be construed in an ideal or overly formal sense unless expressly defined to the contrary.

In describing the components of the present disclosure, terms such as first, second, A, B, (a), and (b) may be used. These terms are used only for the purpose of distinguishing one constituent from another, and the terms do not limit the nature, order or sequence of the components. When one component is said to be "connected," "coupled" or "linked" to another, it should be understood that this means the one component may be directly connected or linked to another one or another component may be interposed between the components.

In the description of the embodiments, "wireless power transmitter," "wireless power transmission device," "transmission terminal," "transmitter," "transmission device," "transmission side," and the like will be interchangeably used to refer to a device for transmitting wireless power in a wireless power system, for simplicity.

In addition, "wireless power reception device," "wireless power receiver," "reception terminal," "reception side," "reception device," "receiver," and the like will be interchangeably used to refer to a device for receiving wireless power from a wireless power transmission device, for simplicity.

The wireless power transmitter according to the present disclosure may be configured as a pad type, a cradle type, an access point (AP) type, a small base station type, a stand type, a ceiling embedded type, a wall-mounted type, a vehicle embedded type, a vehicle resting type, or the like. One transmitter may transmit power to a plurality of wireless power reception devices at the same time.

To this end, the wireless power transmitter may provide at least one wireless power transmission scheme, including, for example, an electromagnetic induction scheme, an electromagnetic resonance scheme, and the like.

For example, for the wireless power transmission schemes, various wireless power transmission standards based on an electromagnetic induction scheme for charging using an electromagnetic induction principle in which a magnetic field is generated in a power transmission terminal coil and electricity is induced in a reception terminal coil by the influence of the magnetic field may be used. Here, the electromagnetic induction type wireless power transmission standards may include an electromagnetic induction type wireless charging technique defined in a Wireless Power Consortium (WPC) technique or a Power Matters Alliance (PMA) technique.

In another example, a wireless power transmission scheme may employ an electromagnetic resonance scheme in which a magnetic field generated by a transmission coil of a wireless power transmitter is tuned to a specific resonant frequency and power is transmitted to a wireless power receiver located a short distance therefrom. For example, the electromagnetic resonance scheme may include a resonance type wireless charging technique defined in Alliance for Wireless Power (A4WP), which is a wireless charging technology standard organization.

In another example, a wireless power transmission scheme may employ an RF wireless power transmission scheme in which low power energy is transmitted to a wireless power receiver located at a remote location over an RF signal.

In another example of the present disclosure, the wireless power transmitter according to the present disclosure may be designed to support at least two wireless power transmission schemes among the electromagnetic induction scheme, the electromagnetic resonance scheme, and the RF wireless power transmission scheme.

In this case, the wireless power transmitter may determine not only a wireless power transmission scheme that the wireless power transmitter and the wireless power receiver are capable of supporting, but also a wireless power transmission scheme which may be adaptively used for the wireless power receiver based on the type, state, required power, and the like of the wireless power receiver.

A wireless power receiver according to an embodiment of the present disclosure may be provided with at least one wireless power transmission scheme, and may simultaneously receive wireless power from two or more wireless power transmitters. Here, the wireless power transmission scheme may include at least one of the electromagnetic induction scheme, the electromagnetic resonance scheme, and the RF wireless power transmission scheme.

The wireless power receiver according to the present disclosure may be embedded in small electronic devices such as a mobile phone, a smartphone, a laptop computer, a digital broadcast terminal, a PDA (Personal Digital Assistant), a PMP (Portable Multimedia Player), a navigation system, an MP3 player, an electric toothbrush, an electronic tag, a lighting device, a remote control, a fishing float, and the like. However, embodiments are not limited thereto, and the wireless power receiver may be applied to any devices which may be provided with the wireless power receiving means according to the present disclosure and be charged through a battery. A wireless power receiver according to another embodiment of the present disclosure may be mounted on a vehicle, an unmanned aerial vehicle, a drone, and the like.

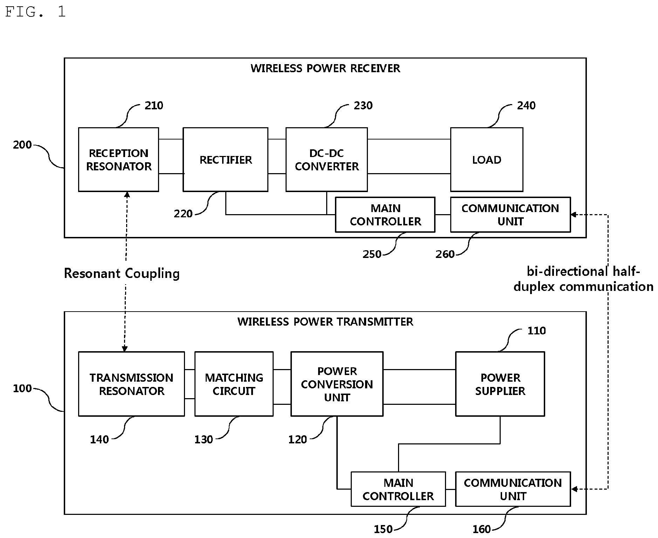

FIG. 1 is a system configuration diagram illustrating a wireless power transmission method using an electromagnetic resonance scheme according to an embodiment of the present disclosure.

Referring to FIG. 1, a wireless power transmission system may include a wireless power transmitter 100 and a wireless power receiver 200.

While FIG. 1 illustrates that the wireless power transmitter 100 transmits wireless power to one wireless power receiver 200, this is merely one embodiment, and the wireless power transmitter 100 according to another embodiment of the present disclosure may transmit wireless power to a plurality of wireless power receivers 200. It should be noted that the wireless power receiver 200 according to yet another embodiment may simultaneously receive wireless power from a plurality of wireless power transmitters 100.

The wireless power transmitter 100 may generate a magnetic field using a specific power transmission frequency (for example, a resonant frequency) to transmit power to the wireless power receiver 200.

The wireless power receiver 200 may receive power by tuning to the same frequency as the power transmission frequency used by the wireless power transmitter 100.

As an example, the frequency used for power transmission may be, but is not limited to, a 6.78 MHz band.

That is, the power transmitted by the wireless power transmitter 100 may be received by the wireless power receiver 200 that is in resonance with the wireless power transmitter 100.

The maximum number of wireless power receivers 200 capable of receiving power from one wireless power transmitter 100 may be determined based on the maximum transmit power level of the wireless power transmitter 100, the maximum receive power level of the wireless power receiver 200, the physical structures of the wireless power transmitter 100 and the wireless power receiver 200, and the like.

The wireless power transmitter 100 and the wireless power receiver 200 can perform bidirectional communication in a frequency band different from the frequency band for wireless power transmission, i.e., the resonant frequency band. As an example, bidirectional communication may employ, without being limited to, a half-duplex Bluetooth low energy (BLE) communication protocol.

The wireless power transmitter 100 and the wireless power receiver 200 may exchange the characteristics and state information on each other, including, for example, power negotiation information for power control and temperature information on the wireless power receiver 200, via bidirectional communication.

As an example, the wireless power receiver 200 may transmit predetermined power reception state information for controlling the level of power received from the wireless power transmitter 100 to the wireless power transmitter 100 via bidirectional communication. The wireless power transmitter 100 may dynamically control the transmit power level based on the received power reception state information. Thereby, the wireless power transmitter 100 may not only optimize the power transmission efficiency, but also provide a function of preventing load breakage due to overvoltage, a function of preventing waste of power and overheating due to under-voltage, and the like.

As another example, the wireless power receiver 200 may measure the temperature using a predetermined temperature detection sensor provided therein, and may transmit information on the measured temperature to the wireless power transmitter 100. In this case, the wireless power transmitter 200 may control the transmit power based on the received temperature information. For example, when the temperature of a specific wireless power receiver 200 is greater than or equal to a predetermined reference value, the wireless power transmitter 200 may control the transmit power such that the temperature drops below the reference value.

In particular, if the wireless power transmitter is capable of simultaneously charging a plurality of wireless power receivers through one transmission coil, the wireless power transmitter may adaptively select a wireless power receiver for which the wireless power transmitter will perform transmit power control, based on at least one of the temperature, receive power level or a required power level of each wireless power receiver. For example, if the temperature of one of the plurality of wireless power receivers is greater than or equal to a predetermined reference value, transmission power control may be performed such that the temperature of the corresponding wireless power receiver may drop below the reference value. As another example, if the temperatures of the plurality of wireless power receivers are normal and the receive power level, which may be, for example, the rectifier output voltage level, of any one of the wireless power receivers is greater than or equal to a predetermined reference value, the wireless power transmitter may perform power control such that the receive power level of the power receiver may fall below a predetermined reference value. As another example, if the temperatures of the plurality of wireless power receivers are normal, there is no wireless power receiver with a plurality of wireless power receivers whose temperature is normal, there is no wireless power receiver having a receive power level higher than or equal to a first level, and there is a wireless power receiver having a receive power level lower than or equal to a second level, the wireless power transmitter may perform power control such that the receive power level of the wireless power receiver is higher than or equal to the second level.

The wireless power transmitter 100 may also perform functions such as authenticating and identifying the wireless power receiver 200 through bidirectional communication, identifying incompatible devices or non-rechargeable objects, identifying a valid load, and the like.

Hereinafter, a wireless power transmission process according to the resonance scheme will be described in more detail with reference to FIG. 1.

The wireless power transmitter 100 may include a power supplier 110, a power conversion unit 120, a matching circuit 130, a transmission resonator 140, a main controller 150, and a communication unit 160. The communication unit may include a data transmitter and a data receiver.

The power supplier 110 may supply a specific supply voltage to the power conversion unit 120 under control of the main controller 150. The supply voltage may be a DC voltage or an AC voltage.

The power conversion unit 120 may convert the voltage received from the power supplier 110 into a specific voltage under control of the main controller 150. To this end, the power conversion unit 120 may include at least one of a DC/DC converter, an AC/DC converter, and a power amplifier.

The matching circuit 130 is a circuit that matches impedances between the power conversion unit 120 and the transmission resonator 140 to maximize power transmission efficiency.

The transmission resonator 140 may wirelessly transmit power using a specific resonant frequency according to the voltage applied from the matching circuit 130.

The wireless power receiver 200 may include a reception resonator 210, a rectifier 220, a DC-DC converter 230, a load 240, a main controller 250 and a communication unit 260. The communication unit may include a data transmitter and a data receiver.

The reception resonator 210 may receive power transmitted by the transmission resonator 140 through the resonance effect.

The rectifier 220 may function to convert the AC voltage applied by the reception resonator 210 into a DC voltage.

The DC-DC converter 230 may convert the rectified DC voltage into a specific DC voltage required by the load 240.

The main controller 250 may control the operation of the rectifier 220 and the DC-DC converter 230 or may generate the characteristics and state information on the wireless power receiver 200 and control the communication unit 260 to transmit the characteristics and state information on the wireless power receiver 200 to the wireless power transmitter 100. For example, the main controller 250 may monitor the intensities of the output voltage and current from the rectifier 220 and the DC-DC converter 230 to control the operation of the rectifier 220 and the DC-DC converter 230.

The intensity information on the monitored output voltage and current may be transmitted to the wireless power transmitter 100 through the communication unit 260.

In addition, the main controller 250 may compare the rectified DC voltage with a predetermined reference voltage and determine whether the voltage is in an overvoltage state or an under-voltage state. When a system error state is sensed as a result of the determination, the controller 250 may transmit the sensed result to the wireless power transmitter 100 through the communication unit 260.

When the system error state is sensed, the main controller 250 may control the operation of the rectifier 220 and the DC-DC converter 230 or control the power supplied to the load 240 using a predetermined overcurrent interruption circuit including a switch and/or a Zener diode, in order to prevent the load from being damaged.

In FIG. 1, the main controller 150 or 250 and the communication unit 160 or 260 of each of the transmitter and the receiver are shown as being configured as different modules, but this is merely one embodiment. It is to be noted that the main controller 150 or 250 and the communication unit 160 or 260 may be configured as a single module.

When an event such as addition of a new wireless power receiver to a charging area during charging, disconnection of a wireless power receiver that is being charged, completion of charging of the wireless power receiver, or the like is sensed, the wireless power transmitter 100 according to an embodiment of the present disclosure may perform a power redistribution procedure for the remaining wireless power receivers to be charged. The result of power redistribution may be transmitted to the connected wireless power receiver(s) via out-of-band communication.

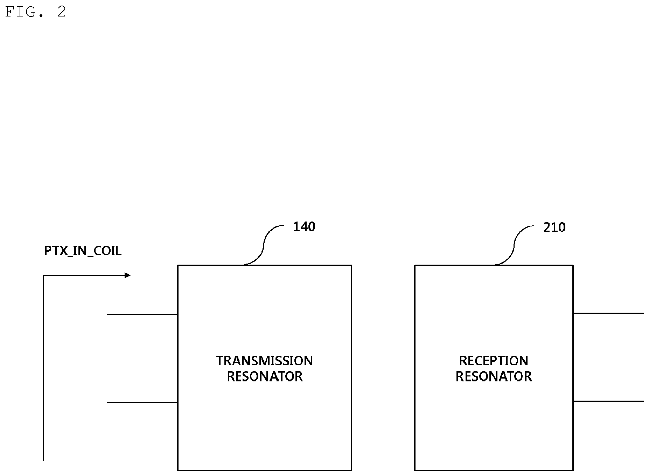

FIG. 2 is a diagram illustrating a type and characteristics of a wireless power transmitter in an electromagnetic resonance scheme according to an embodiment of the present disclosure.

Types and characteristics of the wireless power transmitter and the wireless power receiver according to the present disclosure may be classified into classes and categories.

The type and characteristics of the wireless power transmitter may be broadly identified by the following three parameters.

First, the wireless power transmitter may be identified by a class determined according to the intensity of the maximum power applied to the transmission resonator 140.

Here, the class of the wireless power transmitter may be determined by comparing the maximum value of the power $P_{TX\_IN\_COIL}$ applied to the transmission resonator 140 with a predefined maximum input power for each class specified in a wireless power transmitter class table (hereinafter referred to as Table 1). Here, $P_{TX\_IN\_COIL}$ may be an average real number value calculated by dividing the product of the voltage V(t) and the current I(t) applied to the transmission resonator 140 for a unit time by the unit time.

TABLE 1

| Class | Maximum input power | Minimum category support requirements | Maximum number of supportable devices |
|---|---|---|---|
| Class 1 | 2 W | 1 x Class 1 | 1 x Class 1 |
| Class 2 | 10 W | 1 x Class 3 | 2 x Class 2 |
| Class 3 | 16 W | 1 x Class 4 | 2 x Class 3 |
| Class 4 | 33 W | 1 x Class 5 | 3 x Class 3 |
| Class 5 | 50 W | 1 x Class 6 | 4 x Class 3 |
| Class 6 | 70 W | 1 x Class 6 | 5 x Class 3 |

The classes shown in Table 1 are merely an embodiment, and new classes may be added or existing classes may be deleted. It should also be noted that the maximum input power for each class, the minimum category support requirements, and the maximum number of supportable devices may vary depending on the use, shape, and implementation of the wireless power transmitter.

For example, referring to Table 1, when the maximum value of the power $P_{TX\_IN\_COIL}$ applied to the transmission resonator 140 is greater than or equal to the value of $P_{TX\_IN\_MAX}$ corresponding to Class 3 and less than the value of $P_{TX\_IN\_MAX}$ corresponding to Class 4, the class of the wireless power transmitter may be determined as Class 3.

Second, the wireless power transmitter may be identified according to the minimum category support requirements corresponding to the identified class.

Here, the minimum category support requirement may be a supportable number of wireless power receivers corresponding to the highest level category of the wireless power receiver categories which may be supported by the wireless power transmitter of the corresponding class. That is, the minimum category support requirement may be the minimum number of maximum category devices which may be supported by the wireless power transmitter. In this case, the wireless power transmitter may support wireless power receivers of all categories lower than or equal to the maximum category according to the minimum category requirement.

However, if the wireless power transmitter is capable of supporting a wireless power receiver of a category higher than the category specified in the minimum category support requirement, the wireless power transmitter may not be restricted from supporting the wireless power receiver.

For example, referring to Table 1, a wireless power transmitter of Class 3 should support at least one wireless power receiver of Category 5. Of course, in this case, the wireless power transmitter may support a wireless power receiver 100 that falls into a category lower than the category level corresponding to the minimum category support requirement.

It should also be noted that the wireless power transmitter may support a wireless power receiver of a higher level category if it is determined that the category whose level is higher than the category corresponding to the minimum category support requirement can be supported.

Third, the wireless power transmitter may be identified by the maximum number of supportable devices corresponding to the identified class. Here, the maximum number of supportable devices may be identified by the maximum number of supportable wireless power receivers corresponding to the lowest level category among the categories which are supportable in the class (hereinafter, simply referred to as the maximum number of supportable devices).

For example, referring to Table 1, the wireless power transmitter of Class 3 should support up to two wireless power receivers corresponding to Category 3 which is the lowest level category.

However, when the wireless power transmitter is capable of supporting more than the maximum number of devices corresponding to its own class, it is not restricted from supporting more than the maximum number of devices.

The wireless power transmitter according to the present disclosure must perform wireless power transmission within the available power for up to at least the number defined in Table 1 if there is no particular reason not to allow the power transmission request from the wireless power receivers.

In one example, if there is not enough available power to accept the power transmission request the wireless power transmitter may not accept a power transmission request from the wireless power receiver. Alternatively, it may control power adjustment of the wireless power receiver.

In another example, when the wireless power transmitter accepts a power transmission request, it may not accept a power transmission request from a corresponding wireless power receiver if the number of acceptable wireless power receivers is exceeded.

In another example, the wireless power transmitter may not accept a power transmission request from a wireless power receiver if the category of the wireless power receiver requesting power transmission exceeds a category level that is supportable in the class of the wireless power transmitter.

In another example, the wireless power transmitter may not accept a power transmission request of the wireless power receiver if the internal temperature thereof exceeds a reference value.

In particular, the wireless power transmitter according to the present disclosure may perform the power redistribution procedure based on the currently available power amount. The power redistribution procedure may be performed further considering at least one of a category, a wireless power reception state, a required power amount, a priority, and a consumed power amount of a wireless power receiver for power transmission, which will be described later.

Information on the at least one of the category, wireless power reception state, required power amount, priority, and consumed power amount of the wireless power receiver may be transmitted from the wireless power receiver to the wireless power transmitter through at least one control signal over an out-of-band communication channel.

Once the power redistribution procedure is completed, the wireless power transmitter may transmit the power redistribution result to the corresponding wireless power receiver via out-of-band communication.

The wireless power receiver may recalculate the estimated time required to complete charging based on the received power redistribution result and transmit the re-calculation result to the microprocessor of a connected electronic device. Subsequently, the microprocessor may control the display provided to the electronic device to display the recalculated estimated charging completion time. At this time, the displayed estimated charging completion time may be controlled so as to disappear after being displayed for a predetermined time.

According to another embodiment of the present disclosure, when the estimated time required to complete charging is recalculated, the microprocessor may control the recalculated estimated charging completion to be displayed together with information on the reason for re-calculation. To this end, the wireless power transmitter may also transmit the information on the reason for occurrence of power redistribution to the wireless power receiver when transmitting the power redistribution result.

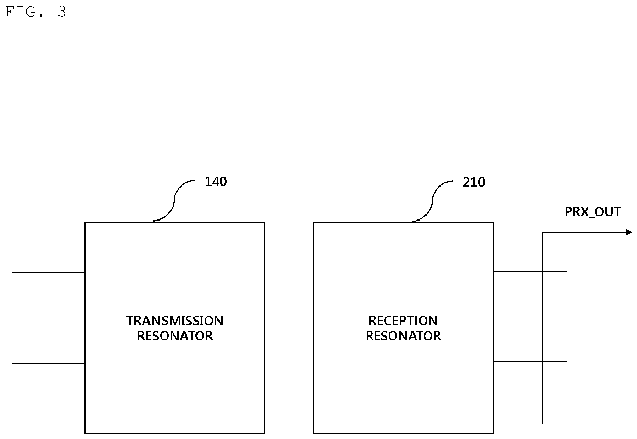

FIG. 3 is a diagram illustrating a type and characteristics of a wireless power receiver in an electromagnetic resonance scheme according to an embodiment of the present disclosure.

As shown in FIG. 3, the average output power $P_{RX\_OUT}$ of the reception resonator 210 is a real number calculated by dividing the product of the voltage V(t) and the current I(t) output by the reception resonator 210 for a unit time by the unit time.

The category of the wireless power receiver may be defined based on the maximum output power $P_{RX\_OUT\_MAX}$ of the reception resonator 210, as shown in Table 2 below.

TABLE 2

| Category | Maximum input power | Application example |
|---|---|---|
| Category 1 | TBD | Bluetooth handset |
| Category 2 | 3.5 W | Feature phone |
| Category 3 | 6.5 W | Smartphone |
| Category 4 | 13 W | Tablet |
| Category 5 | 25 W | Small laptop |
| Category 6 | 37.5 W | Laptop |
| Category 6 | 50 W | TBD |

For example, if the charging efficiency at the load stage is 80% or more, the wireless power receiver of Category 3 may supply power of 5 W to the charging port of the load.

The categories disclosed in Table 2 are merely an embodiment, and new categories may be added or existing categories may be deleted. It should also be noted that the maximum output power for each category and the application examples shown in Table 2 may change depending on the use, shape and implementation of the wireless power receiver.

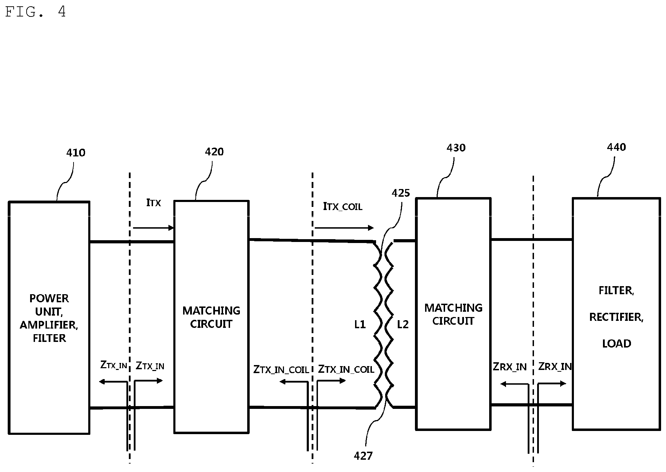

FIG. 4 shows equivalent circuit diagrams of a wireless power transmission system in an electromagnetic resonance scheme according to an embodiment of the present disclosure.

Specifically, FIG. 4 shows interface points on the equivalent circuit at which reference parameters, which will be described later, are measured.

Hereinafter, meanings of the reference parameters shown in FIG. 4 will be briefly described.

$I_{TX}$ and $I_{TX\_COIL}$ denote the RMS (Root Mean Square) current applied to the matching circuit (or matching network) 420 of the wireless power transmitter and the RMS current applied to the transmission resonator coil 425 of the wireless power transmitter.

$Z_{TX\_IN}$ denotes the input impedance at the rear end of the power unit/amplifier/filter 410 of the wireless power transmitter and the input impedance at the front end of the matching circuit 420.

$Z_{TX\_IN\_COIL}$ denotes the input impedance at the rear end of the matching circuit 420 and the front end of the transmission resonator coil 425.

L1 and L2 denote the inductance value of the transmission resonator coil 425 and the inductance value of the reception resonator coil 427, respectively.

$Z_{RX\_IN}$ denotes the input impedance at the rear end of the matching circuit 430 of the wireless power receiver and the front end of the filter/rectifier/load 440 of the wireless power receiver.

The resonant frequency used in the operation of the wireless power transmission system according to an embodiment of the present disclosure may be 6.78 MHz ± 15 kHz.

In addition, the wireless power transmission system according to an embodiment may provide simultaneous charging (i.e., multi-charging) for a plurality of wireless power receivers. In this case, even if a wireless power receiver is newly added or removed, the received power variation of the remaining wireless power receivers may be controlled so as not to exceed a predetermined reference value. For example, the received power variation may be ± 10%, but embodiments are not limited thereto. If it is not possible to control the received power variation not to exceed the reference value, the wireless power transmitter may not accept the power transmission request from the newly added wireless power receiver.

The condition for maintaining the received power variation is that the existing wireless power receivers should not overlap a wireless power receiver that is added to or removed from the charging area.

When the matching circuit 430 of the wireless power receiver is connected to the rectifier, the real part of $Z_{TX\_IN}$ may be inversely proportional to the load resistance of the rectifier (hereinafter referred to as $R_{RECT}$). That is, an increase in $R_{RECT}$ may decrease $Z_{TX\_IN}$, and a decrease in $R_{RECT}$ may increase $Z_{TX\_IN}$.

The resonator coupling efficiency according to the present disclosure may be a maximum power reception ratio calculated by dividing the power transmitted from the reception resonator coil to the load 440 by the power carried in the resonant frequency band in the transmission resonator coil 425. The resonator coupling efficiency between the wireless power transmitter and the wireless power receiver may be calculated when the reference port impedance $Z_{TX\_IN}$ of the transmission resonator and the reference port impedance $Z_{RX\_IN}$ of the reception resonator are perfectly matched.

Table 3 below is an example of the minimum resonator coupling efficiencies according to the classes of the wireless power transmitter and the classes of the wireless power receiver according to an embodiment of the present disclosure.

TABLE 3

|  | Category 1 | Category 2 | Category 3 | Category 4 | Category 5 | Category 6 | Category 7 |
|---|---|---|---|---|---|---|---|
| Class 1 | N/A | N/A | N/A | N/A | N/A | N/A | N/A |
| Class 2 | N/A | 74% (-1.3) | 74% (-1.3) | N/A | N/A | N/A | N/A |
| Class 3 | N/A | 74% (-1.3) | 74% (-1.3) | 76% (-1.2) | N/A | N/A | N/A |
| Class 4 | N/A | 50% (-3) | 65% (-1.9) | 73% (-1.4) | 76% (-1.2) | N/A | N/A |
| Class 5 | N/A | 40% (-4) | 60% (-2.2) | 63% (-2) | 73% (-1.4) | 76% (-1.2) | N/A |
| Class 5 | N/A | 30% (-5.2) | 50% (-3) | 54% (-2.7) | 63% (-2) | 73% (-1.4) | 76% (-1.2) |

When a plurality of wireless power receivers is used, the minimum resonator coupling efficiencies corresponding to the classes and categories shown in Table 3 may increase.

The wireless power transmitter may charge one or more wireless power receivers by adjusting $I_{TX\_COIL}$. Here, $I_{TX\_COIL}$ may be adjusted within a predetermined unit time. For example, the adjustment unit time of $I_{TX\_COIL}$ may be shorter than 250 ms, but is not limited thereto.

In particular, the wireless power transmitter may dynamically control $I_{TX\_COIL}$ based on state information received from the wireless power receiver. Here, the state information of the wireless power receiver may include static state information or dynamic state information.

For example, the static state information of the wireless power receiver may include at least one of category information, hardware and software version information, maximum rectifier output power information, initial reference parameter information for power control, information about a required voltage or power, information about identifying whether the power adjustment function is embedded, information about a supported out-of-band communication scheme, information about a supported power control algorithm, or preferred rectifier-group voltage information initially set in the wireless power receiver. The static state information of the wireless power receiver may further include information on the maximum capacity of the load and information on the current charging level of the load.

As one example, the dynamic state information of the wireless power receiver may include at least one of information on the rectifier output voltage and current, information on voltage and current applied to the load, information on a measured internal temperature of the wireless power receiver, reference parameter change information (changed values of the minimum rectified voltage, the maximum rectified voltage, and the initially set preferred rectifier-group voltage), charging state information including, for example, information on whether charging is completed and information on the current charging level of the load, system error information, or alarm information including, for example, local fault information. The wireless power transmitter may perform power adjustment by changing the set value included in the existing static state information upon receiving reference parameter change information for power control.

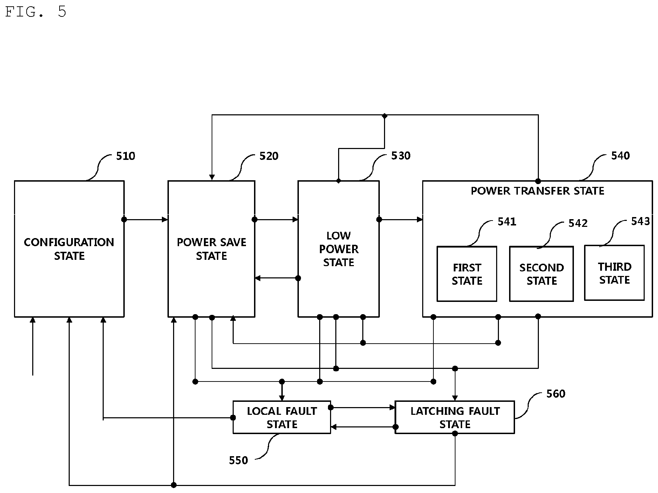

FIG. 5 is a state transition diagram illustrating a state transition procedure of a wireless power transmitter that supports the electromagnetic resonance scheme according to an embodiment of the present disclosure.

Referring to FIG. 5, the states of the wireless power transmitter may include a configuration state 510, a power save state 520, a low power state 530, a power transfer state 540, a local fault state 550, and a latching fault state 560.

When power is applied to the wireless power transmitter, the wireless power transmitter may transition to the configuration state 510. The wireless power transmitter may transition to a power save state 520 when a predetermined reset timer expires in the configuration state 510 or the initialization procedure is completed.

In the power save state 520, the wireless power transmitter may generate a beacon sequence and transmit the same through a resonant frequency band.

Here, the wireless power transmitter may control the beacon sequence to be initiated within a predetermined time after entering the power save state 520. For example, the wireless power transmitter may control the beacon sequence to be initiated within 50 ms after transition to the power save state 520. However, embodiments are not limited thereto.

In the power save state 520, the wireless power transmitter may periodically generate and transmit a first beacon sequence for sensing a wireless power receiver, and sense change in impedance of the reception resonator, that is, load variation. Hereinafter, for simplicity, the first beacon and the first beacon sequence will be referred to as a short beacon and a short beacon sequence, respectively.

In particular, the short beacon sequence may be repeatedly generated and transmitted at a constant time interval $t_{CYCLE}$ during a short period $t_{SHORT\_BEACON}$ such that the standby power of the wireless power transmitter may be reduced until a wireless power receiver is sensed. For example, $t_{SHORT\_BEACON}$ may be set to 30 ms or less, and $t_{CYCLE}$ may be set to 250 ms $\pm$ 5 ms. In addition, the current intensity of the short beacon may be greater than a predetermined reference value, and may be gradually increased during a predetermined time period. For example, the minimum current intensity of the short beacon may be set to be sufficiently large such that a wireless power receiver of Category 2 or a higher category in Table 2 above may be sensed.

The wireless power transmitter according to the present disclosure may be provided with a predetermined sensing means for sensing change in reactance and resistance of the reception resonator according to the short beacon.

In addition, in the power save state 520, the wireless power transmitter may periodically generate and transmit a second beacon sequence for providing sufficient power necessary for booting and response of the wireless power receiver. Hereinafter, for simplicity, the second beacon and the second beacon sequence will be referred to as a long beacon and a long beacon sequence, respectively.

That is, the wireless power receiver may broadcast a predetermined response signal over an out-of-band communication channel when booting is completed through the second beacon sequence.

In particular, the long beacon sequence may be generated and transmitted at a constant time interval $t_{LONG\_BEACON\_PERIOD}$ during a relatively long period $t_{LONG\_BEACON}$ compared to the short beacon to supply sufficient power necessary for booting the wireless power receiver. For example, $t_{LONG\_BEACON}$ may be set to 105 ms + 5 ms, and $t_{LONG\_BEACON\_PERIOD}$ may be set to 850 ms. The current intensity of the long beacon may be stronger than the current intensity of the short beacon. In addition, the long beacon may maintain power of a certain intensity during the transmission period.

Thereafter, the wireless power transmitter may wait to receive a predetermined response signal during the long beacon transmission period after change in impedance of the reception resonator is sensed. Hereinafter, for simplicity, the response signal will be referred to as an advertisement signal. Here, the wireless power receiver may broadcast the advertisement signal in an out-of-band communication frequency band that is different from the resonant frequency band.

In one example, the advertisement signal may include at least one of or any one of message identification information for identifying a message defined in the out-of-band communication standard, a unique service or wireless power receiver identification information for identifying whether the wireless power receiver is legitimate or compatible with the wireless power transmitter, information about the output power of the wireless power receiver, information about the rated voltage/current applied to the load, antenna gain information about the wireless power receiver, information for identifying the category of the wireless power receiver, wireless power receiver authentication information, information about whether or not the overvoltage protection function is provided, and version information about the software installed on the wireless power receiver.

Upon receiving the advertisement signal, the wireless power transmitter may establish an out-of-band communication link with the wireless power receiver after transitioning from the power save state 520 to the low power state 530. Subsequently, the wireless power transmitter may perform the registration procedure for the wireless power receiver over the established out-of-band communication link. For example, if the out-of-band communication is Bluetooth low-power communication, the wireless power transmitter may perform Bluetooth pairing with the wireless power receiver and exchange at least one of the state information, characteristic information, and control information about each other via the paired Bluetooth link.

If the wireless power transmitter transmits a predetermined control signal for initiating charging via out-of-band communication, i.e., a predetermined control signal for requesting that the wireless power receiver transmit power to the load, to the wireless power receiver in the low power state 530, the state of the wireless power transmitter may transition from the low power state 530 to the power transfer state 540.

If the out-of-band communication link establishment procedure or registration procedure is not normally completed in the low power state 530, the wireless power transmitter may transition from the low power state 530 to the power save state 520.

A separate independent link expiration timer by which the wireless power transmitter may connect to each wireless power receiver may be driven, and the wireless power receiver may transmit a predetermined message for announcing its presence to the wireless power transmitter in a predetermined time cycle before the link expiration timer expires. The link expiration timer is reset each time the message is received. If the link expiration timer does not expire, the out-of-band communication link established between the wireless power receiver and the wireless power receiver may be maintained.

If all of the link expiration timers corresponding to the out-of-band communication link established between the wireless power transmitter and the at least one wireless power receiver have expired in the low power state 530 or the power transfer state 540, the wireless power transmitter may transition to the power save state 520.

In addition, the wireless power transmitter in the low power state 530 may drive a predetermined registration timer when a valid advertisement signal is received from the wireless power receiver. When the registration timer expires, the wireless power transmitter in the low power state 530 may transition to the power save state 520. At this time, the wireless power transmitter may output a predetermined notification signal announcing that registration has failed through a notification display means (including, for example, an LED lamp, a display screen, and a beeper) provided in the wireless power transmitter.

Further, in the power transfer state 540, when charging of all connected wireless power receivers is completed, the wireless power transmitter may transition to the low power state 530.

In particular, the wireless power receiver may allow registration of a new wireless power receiver in states other than the configuration state 510, the local fault state 550, and the latching fault state 560.

In addition, the wireless power transmitter may dynamically control the transmit power based on the state information received from the wireless power receiver in the power transfer state 540.

Here, the receiver state information transmitted from the wireless power receiver to the wireless power transmitter may include at least one of required power information, information on the voltage and/or current measured at the rear end of the rectifier, charge state information, information indicating the overcurrent, overvoltage and/or overheated state, and information indicating whether or not a means for cutting off or reducing power transferred to the load according to the overcurrent or the overvoltage is activated. The receiver state information may be transmitted with a predetermined periodicity or transmitted every time a specific event is generated. In addition, the means for cutting off or reducing the power transferred to the load according to the overcurrent or overvoltage may be provided using at least one of an ON/OFF switch and a Zener diode.

According to another embodiment, the receiver state information transmitted from the wireless power receiver to the wireless power transmitter may further include at least one of information indicating that an external power source is connected to the wireless power receiver by wire and information indicating that the out-of-band communication scheme has changed (e.g., the communication scheme may change from NFC (Near Field Communication) to BLE (Bluetooth Low Energy) communication).

According to another embodiment of the present disclosure, a wireless power transmitter may adaptively determine the intensity of power to be received by each wireless power receiver based on at least one of the currently available power of the power transmitter, the priority of each wireless power receiver, or the number of connected wireless power receivers. Here, the power intensity of each wireless power receiver may be determined as a share of power to be received with respect to the maximum power that may be processed by the rectifier of the corresponding wireless power receiver.

Thereafter, the wireless power transmitter may transmit, to the wireless power receiver, a predetermined power control command including information about the determined power intensity. Then, the wireless power receiver may determine whether power control can be performed based on the power intensity determined by the wireless power transmitter, and transmit the determination result to the wireless power transmitter through a predetermined power control response message.

According to another embodiment of the present disclosure, a wireless power receiver may transmit predetermined receiver state information indicating whether wireless power control can be performed according to a power control command of a wireless power transmitter before receiving the power control command.

The power transfer state 540 may be any one of a first state 541, a second state 542 and a third state 543 depending on the power reception state of the connected wireless power receiver.

In one example, the first state (Power State 1) 541 may indicate that the power reception state of all wireless power receivers connected to the wireless power transmitter is a normal voltage state. That is, this state may indicate that there is no transmitter or receiver which is in the system error state.

The second state (Power State 2) 542 may indicate that the power reception state of at least one wireless power receiver connected to the wireless power transmitter is a low voltage state, there is no transmitter or receiver which is in the system error state, and there is no wireless power receiver which is in a high voltage state.

The third state (Power State 3) 543 may indicate that the power reception state of at least one wireless power receiver connected to the wireless power transmitter is in the high voltage state and there is no transmitter or receiver in the system error state.

When a system error is sensed in the power save state 520, the low power state 530, or the power transfer state 540, the wireless power transmitter may transition to the latching fault state 560.

The wireless power transmitter in the latching fault state 560 may transition to either the configuration state 510 or the power save state 520 upon determining that all connected wireless power receivers have been removed from the charging area.

In addition, when a local fault is sensed in the latching fault state 560, the wireless power transmitter may transition to the local fault state 550. Here, the wireless power transmitter in the local fault state 550 may transition back to the latching fault state 560 when the local fault is released.

On the other hand, in the case where the wireless power transmitter transitions from any one state among the configuration state 510, the power save state 520, the low power state 530, and the power transfer state 540 to the local fault state 550, the wireless power transmitter may transition to the configuration state 510 once the local fault is released.

The wireless power transmitter may interrupt the power supplied to the wireless power transmitter once it transitions to the local fault state 550. For example, the wireless power transmitter may transition to the local fault state 550 when a fault such as overvoltage, overcurrent, or overheating is sensed. However, embodiments are not limited thereto.

In one example, the wireless power transmitter may transmit, to at least one connected wireless power receiver, a predetermined power control command for reducing the intensity of power received by the wireless power receiver when overcurrent, overvoltage, or overheating is sensed.

In another example, the wireless power transmitter may transmit, to at least one connected wireless power receiver, a predetermined control command for stopping charging of the wireless power receiver when overcurrent, overvoltage, or overheating is sensed.

Through the above-described power control procedure, the wireless power transmitter may prevent damage to the device due to overvoltage, overcurrent, overheating, or the like.

If the intensity of the output current of the transmission resonator is greater than or equal to a reference value, the wireless power transmitter may transition to the latching fault state 560. The wireless power transmitter that has transitioned to the latching fault state 560 may attempt to make the intensity of the output current of the transmission resonator less than or equal to a reference value for a predetermined time. Here, the attempt may be repeated a predetermined number of times. If the latching fault state 560 is not released despite repeated execution, the wireless power transmitter may send, to the user, a predetermined notification signal indicating that the latching fault state 560 is not released, using a predetermined notification means. In this case, when all of the wireless power receivers positioned in the charging area of the wireless power transmitter are removed from the charging area by the user, the latching fault state 560 may be released.

On the other hand, if the intensity of the output current of the transmission resonator falls below the reference value within a predetermined time, or if the intensity of the output current of the transmission resonator falls below the reference value during the predetermined repetition, the latching fault state 560 may be automatically released. In this case, the wireless power transmitter may automatically transition from the latching fault state 560 to the power save state 520 to perform the sensing and identification procedure for a wireless power receiver again.

The wireless power transmitter in the power transfer state 540 may transmit continuous power and adaptively control the transmit power based on the state information on the wireless power receiver and predefined optimal voltage region setting parameters.

For example, the predefined optimal voltage region setting parameters may include at least one of a parameter for identifying a low voltage region, a parameter for identifying an optimum voltage region, a parameter for identifying a high voltage region, and a parameter for identifying an overvoltage region.

The wireless power transmitter may increase the transmit power if the power reception state of the wireless power receiver is in the low voltage region, and reduce the transmit power if the power reception state is in the high voltage region.

The wireless power transmitter may also control the transmit power to maximize power transmission efficiency.

The wireless power transmitter may also control the transmit power such that the deviation of the amount of power required by the wireless power receiver is less than or equal to a reference value.

In addition, the wireless power transmitter may stop transmitting power when the output voltage of the rectifier of the wireless power receiver reaches a predetermined overvoltage region, namely, when overvoltage is sensed.

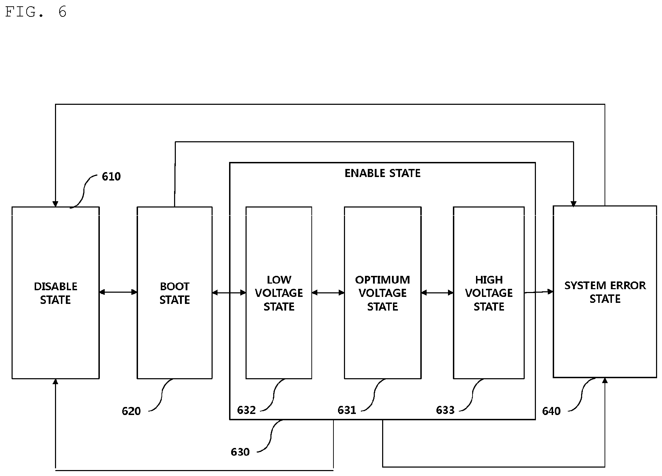

FIG. 6 is a state transition diagram illustrating a state transition procedure of a wireless power receiver in an electromagnetic resonance scheme according to an embodiment of the present disclosure.

Referring to FIG. 6, the states of the wireless power receiver may include a disable state 610, a boot state 620, an enable state (or on state) 630 and a system error state 640.

The state of the wireless power receiver may be determined based on the intensity of the output voltage at the rectifier end of the wireless power receiver (hereinafter referred to as $V_{RECT}$ for simplicity).

The enable state 630 may be divided into an optimum voltage 631, a low voltage state 632 and a high voltage state 633 according to the value of $V_{RECT}$.

The wireless power receiver in the disable state 610 may transition to the boot state 620 if the measured value of $V_{RECT}$ is greater than or equal to the predefined value of $V_{RECT\_BOOT}$.

In the boot state 620, the wireless power receiver may establish an out-of-band communication link with a wireless power transmitter and wait until the value of $V_{RECT}$ reaches the power required at the load stage.

Upon sensing that the value of $V_{RECT}$ has reached the power required at the load stage, the wireless power receiver in the boot state 620 may transition to the enable state 630 and begin charging.

The wireless power receiver in the enable state 630 may transition to the boot state 620 upon sensing that charging is completed or interrupted.

In addition, the wireless power receiver in the enable state 630 may transition to the system error state 640 when a predetermined system error is sensed. Here, the system error may include overvoltage, overcurrent, and overheating, as well as other predefined system error conditions.

In addition, the wireless power receiver in the enable state 630 may transition to the disable state 610 if the value of $V_{RECT}$ falls below the value of $V_{REC\_BOOT}$.

In addition, the wireless power receiver in the boot state 620 or the system error state 640 may transition to the disable state 610 if the value of $V_{RECT}$ falls below the value of $V_{RECT\_BOOT}$.

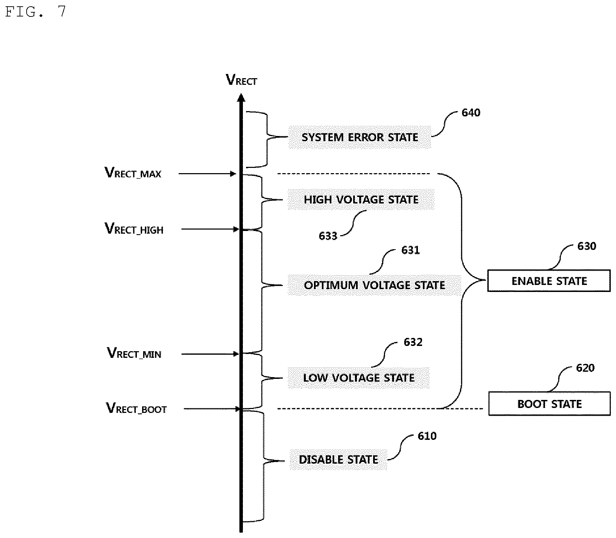

Hereinafter, state transition of the wireless power receiver in the enable state 630 will be described in detail with reference to FIG. 7.

FIG. 7 illustrates operation regions of a wireless power receiver according to $V_{RECT}$ in an electromagnetic resonance scheme according to an embodiment of the present disclosure.

Referring to FIG. 7, if the value of $V_{RECT}$ is less than a predetermined value of $V_{RECT\_BOOT}$, the wireless power receiver is maintained in the disable state 710.

Thereafter, when the value of $V_{RECT}$ is increased beyond $V_{RECT\_BOOT}$, the wireless power receiver may transition to the boot state 720 and broadcast an advertisement signal within a predetermined time. Thereafter, when the advertisement signal is sensed by the wireless power transmitter, the wireless power transmitter may transmit a predetermined connection request signal for establishing an out-of-band communication link to the wireless power receiver.

Once the out-of-band communication link is normally established and successfully registered, the wireless power receiver may wait until the value of $V_{RECT}$ reaches the minimum output voltage of the rectifier for normal charging (hereinafter referred to as $V_{RECT-MIN}$ for simplicity) .

If the value of $V_{RECT}$ exceeds $V_{RECT-MIN}$, the wireless power receiver may transition from the boot state 720 to the enable state 730 and may begin charging the load.

If the value of $V_{RECT}$ in the enable state 730 exceeds a predetermined reference value $V_{RECT\_MAX}$ for determining overvoltage, the wireless power receiver may transition from the enable state 730 to the system error state 740.

Referring to Figure 7, the enable state 730 may be divided into the low voltage state 732, the optimum voltage state 731 and the high voltage state 733 according to the value of $V_{RECT}$.

The low voltage state 732 may refer to a state in which $V_{RECT\_BOOT} \leq V_{RECT} \leq V_{RECT-MIN}$, the optimum voltage state 631 may refer to a state in which $V_{RECT\_MIN} < V_{RECT} \leq V_{RECT-HIGH}$, and the high voltage state 733 may refer to a state in which $V_{RECT\_HIGH} < V_{RECT} \leq V_{RECT\_MAX}$. Here, $V_{RECT\_BOOT}$ is the minimum value for the wireless power receiver to enter the boot state 720. If $V_{RECT}$ is less than $V_{RECT-BOOT}$, the wireless power receiver cannot be booted. $V_{RECT\_MIN}$ is the minimum value at which the wireless power receiver may deliver power to the load at full power. If $V_{RECT}$ is less than $V_{RECT\_MIN}$, the wireless power receiver cannot perform charging at full power. $V_{RECT\_HIGH}$ is the maximum value of the optimum voltage state 731. If $V_{RECT}$ exceeds $V_{RECT-HIGH}$, the wireless power receiver will transit to the high voltage state 733.

In particular, the wireless power receiver having transitioned to the high voltage state 733 may suspend the operation of cutting off the power supplied to the load for a predetermined time (hereinafter referred to as a high voltage state maintenance time for simplicity). The high voltage state maintenance time may be predetermined so as not to cause damage to the wireless power receiver and the load in the high voltage state 733.

When the wireless power receiver transitions to the system error state 740, it may transmit a predetermined message indicating occurrence of overvoltage to the wireless power transmitter through the out-of-band communication link within a predetermined time.

The wireless power receiver may also control the voltage applied to the load using an overvoltage interruption means provided to prevent damage to the load due to the overvoltage in the system fault state 730. Here, an ON/OFF switch and/or a Zener diode may be used as the overvoltage interruption means.

Although a method and means for coping with a system error in a wireless power receiver when overvoltage is generated and the wireless power receiver transitions to the system error state 740 have been described in the above embodiment, this is merely an embodiment. In other embodiments, the wireless power receiver may transition to the system error state due to overheating, overcurrent, and the like.

As an example, in the case where the wireless power receiver transitions to the system error state due to overheating, the wireless power receiver may transmit a predetermined message indicating the occurrence of overheating to the wireless power transmitter. In this case, the wireless power receiver may drive a cooling fan or the like to reduce the internally generated heat.

According to another embodiment of the present disclosure, a wireless power receiver may receive wireless power in conjunction with a plurality of wireless power transmitters. In this case, the wireless power receiver may transition to the system error state 740 upon determining that the wireless power transmitter from which the wireless power receiver is determined to actually receive wireless power is different from the wireless power transmitter with which the out-of-band communication link is actually established.

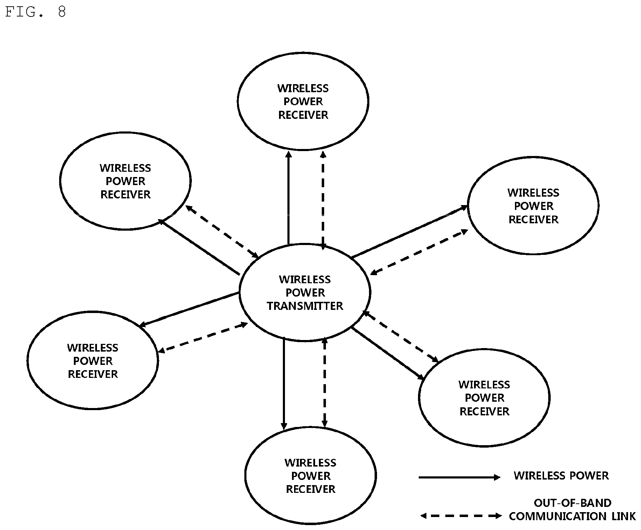

FIG. 8 is a configuration diagram of a wireless power transmission system according to an embodiment of the present disclosure.

As shown in FIG. 8, the wireless power transmission system may be configured by star topology, but is not limited thereto.

A wireless power transmitter may collect various kinds of characteristics information and state information from a wireless power receiver over an out-of-band communication link, and control the operation and transmit power of the wireless power receiver based on the collected information.

The wireless power transmitter may also transmit the characteristics information thereabout and a predetermined control signal to the wireless power receiver over the out-of-band communication link.

The wireless power transmitter may also determine the order of power transmission to the connected wireless power receivers and may transmit the wireless power according to the determined order of power transmission. For example, the wireless power transmitter may determine the order of power transmission based on at least one of the category of the wireless power receiver, priorities pre-assigned to respective wireless power receivers, the power reception efficiency of the wireless power receivers or the power transmission efficiency of the wireless power transmitter, the minimum resonance matching efficiency between the wireless power transmitter and the wireless power receivers, the charging efficiency of the load, the charging states of the wireless power receivers, or occurrence of system error in each wireless power receiver.

The wireless power transmitter may also determine the amount of power to be transmitted to each of the wireless power receivers connected thereto. For example, the wireless power transmitter may calculate the amount of power to be transmitted to each wireless power receiver based on the currently available amount of power and the power reception efficiency of each of the wireless power receivers, and transmit information about the calculated amount of power to the wireless power receivers over a predetermined control message.

In addition, the wireless power transmitter may initiate a power redistribution procedure if a change in the wireless charging state is detected, as in a case where a new wireless power receiver is added to the charging area, the existing wireless power receiver that is being charged is removed from the charging area, charging of the existing wireless power receiver that is being charged is completed, or a system error of the existing wireless power receiver that is being charged is detected. Then, the result of power redistribution may be transmitted to the wireless power receivers through a predetermined control message.

The wireless power transmitter may also generate and provide a time synchronization signal to the wireless power receiver to obtain time synchronization with the network-connected wireless power receiver(s). Here, the time synchronization signal may be transmitted through a frequency band for wireless power transmission, that is, in-band, or a frequency band for out-of-band communication, that is, out-of-band. The wireless power transmitter and the wireless power receiver may manage the communication timing and communication sequence of each other based on the time synchronization signal.

While FIG. 8 illustrates a configuration in which a wireless power transmission system including one wireless power transmitter and a plurality of wireless power receivers is networked in star topology, this is only an embodiment. In a wireless power transmission system according to another embodiment of the present disclosure, a plurality of wireless power transmitters and a plurality of wireless power receivers may be network-connected to transmit and receive wireless power. In this case, the wireless power transmitter may transmit the state information thereabout and/or the state information about a wireless power receiver connected thereto to another network-connected wireless power transmitter over a separate communication channel. In addition, if the wireless power receiver is a mobile device, the wireless power receiver may perform a control operation such that power is seamlessly received by the moving wireless power receiver through handover between the wireless power receiver and the wireless power transmitter.

If one wireless power receiver receives wireless power from a plurality of wireless power transmitters simultaneously during the handover process, the wireless power receiver may sum the powers received from the respective wireless power transmitters and calculate the estimated time required to complete charging of the load, based on the sum. That is, the wireless power receiver or the electronic device connected to the wireless power receiver may adaptively calculate the expected charging completion time according to the handover and perform a control operation to display the calculated time on a display screen.

In addition, the wireless power transmitter may operate as a network coordinator and may exchange information with the wireless power receiver over an out-of-band communication link. For example, the wireless power transmitter may receive various kinds of information of the wireless power receiver to generate and manage a predetermined device control table and may transmit network management information to the wireless power receiver based on the device control table. This allows the wireless power transmitter to create and maintain a wireless power transmission system network.

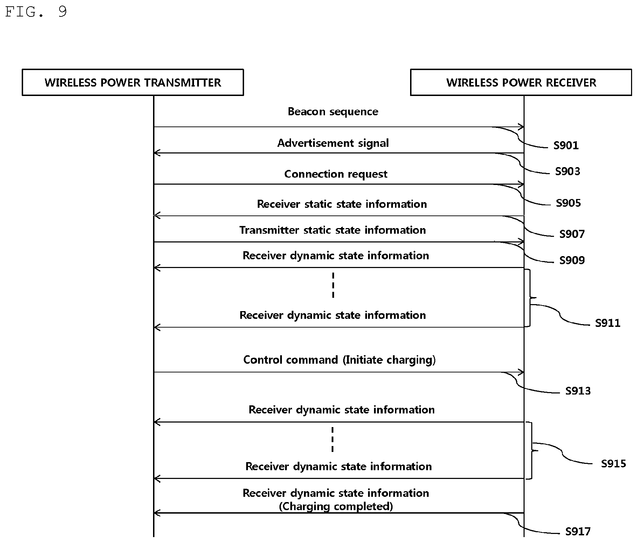

FIG. 9 is a flowchart illustrating a wireless charging procedure according to an embodiment of the present disclosure.

Referring to FIG. 9, the wireless power transmitter may generate a beacon sequence and transmit the beacon sequence through a transmission resonator when configuration of a wireless power transmitter, namely, booting, is completed (S901).

Upon sensing the beacon sequence, the wireless power receiver may broadcast an advertisement signal including the identification information and characteristics information thereabout (S903). Here, it should be noted that the advertisement signal can be repeatedly transmitted with a predetermined periodicity until a connection request signal, which will be described later, is received from the wireless power transmitter.

Upon receiving the advertisement signal, the wireless power transmitter may transmit a predetermined connection request signal for establishing an out-of-band communication link to the wireless power receiver (S905).

Upon receiving the connection request signal, the wireless power receiver may establish an out-of-band communication link and transmit static state information thereabout over the established out-of-band communication link (S907).

Here, the static state information of the wireless power receiver may include at least one of category information, hardware and software version information, maximum rectifier output power information, initial reference parameter information for power control, information about a required voltage or power, information about identifying whether the power adjustment function is embedded, information about a supported out-of-band communication scheme, information about a supported power control algorithm, or preferred rectifier-group voltage information initially set in the wireless power receiver. The static state information of the wireless power receiver may further include information on the maximum capacity of the load and information on the current charging level of the load.

Upon receiving the static state information about the wireless power receiver, the wireless power transmitter may transmit the static state information thereof to the wireless power receiver over the out-of-band communication link (S909).

Here, the static state information about the wireless power transmitter may include at least one of transmitter output power information, class information, hardware and software version information, information about the maximum number of supported wireless power receivers, and/or information about the number of currently connected wireless power receivers.

Thereafter, the wireless power receiver may monitor its own real-time power reception state and charging state and may transmit the dynamic state information to the wireless power transmitter periodically or when a specific event occurs (S911).

Here, the dynamic state information of the wireless power receiver may include at least one of information on the rectifier output voltage and current, information on voltage and current applied to the load, information on a measured internal temperature of the wireless power receiver, reference parameter change information (changed values of the minimum rectified voltage, the maximum rectified voltage, and the initially set preferred rectifier-group voltage), charging state information including, for example, information on whether charging is completed and information on the current charging level of the load, system error information, or alarm information including, for example, local fault information. The wireless power transmitter may perform power adjustment by changing the set value included in the existing static state information upon receiving reference parameter change information for power control.

In addition, when sufficient power for charging the wireless power receiver is prepared, the wireless power transmitter may send a predetermined control command over the out-of-band communication link to control the wireless power receiver to start the charging operation (S913).

Thereafter, the wireless power transmitter may receive dynamic state information from the wireless power receiver and dynamically control the transmit power (S915).

In addition, when an internal system error is sensed or charging is completed, the wireless power receiver may transmit dynamic state information to the wireless power transmitter, including data for identifying a corresponding system error and/or data indicating that charging is complete (S917). Here, the system error may include overcurrent, overvoltage, and overheating.

According to another embodiment of the present disclosure, when a currently available power cannot meet the required power of all the connected wireless power receivers, the wireless power transmitter may redistribute the power to be transmitted to the respective wireless power receivers, and transmit the redistributed power to the corresponding wireless power receiver.

In addition, when a new wireless power receiver is additionally registered or connected during wireless charging, the wireless power transmitter may redistribute the power to be received by the respective connected wireless power receivers based on the currently available power and transmits the same to the corresponding wireless power receivers through a predetermined control command.

In addition, when charging of a connected wireless power receiver is completed or the out-of-band communication link is released (for example, when the wireless power receiver is removed from the charging area) during wireless charging, the wireless power transmitter may redistribute the power to be received by the other wireless power receivers and transmit the same to the corresponding wireless power receivers through a predetermined control command.

The wireless power transmitter may also check, through a predetermined control procedure, whether a wireless power receiver is equipped with a power control function. In this case, when the power redistribution situation occurs, the wireless power transmitter may perform power redistribution only for the wireless power receiver equipped with the power control function.

For example, power redistribution may take place in the event that a valid advertisement signal is received from an unconnected wireless power receiver and thus a new wireless power receiver is added, a dynamic parameter indicating a current state of a connected wireless power receiver is received, it is recognized that there is no connected wireless power receiver anymore, charging of a connected wireless power receiver is completed, or an alarm message indicating a system error state of the connected wireless power receiver is received.

Here, the system error state may include an overvoltage state, an overcurrent state, an overheated state, and a network connection error state.

In one example, the wireless power transmitter may transmit power redistribution-related information to the wireless power receivers through a predetermined control command.

Here, the power redistribution-related information may include command information for power control of a wireless power receiver, information for identifying whether a power transmission request is permitted or denied, and time information used for the wireless power receiver to generate a valid load variation.

Here, the command for power control of the wireless power receiver may include a first command for controlling received power provided to the load by the wireless power receiver, a second command for permitting the wireless power receiver to indicate that charging is being performed, and an Adjust Power command indicating the ratio of the maximum power that may be provided by the wireless power transmitter to the maximum rectifier power of the wireless power receiver.

If the wireless power receiver does not support the Adjust Power command, the wireless power transmitter may not transmit the Adjust Power command to the wireless power receiver.

For example, when a new wireless power receiver is registered, the wireless power transmitter may determine whether it can provide the amount of power required by the wireless power receiver, based on the amount of available power of the wireless power transmitter. If the required amount of power exceeds the amount of available power as a result of the determination, the wireless power transmitter may check whether or not the corresponding wireless power receiver is equipped with the power control function. If the corresponding wireless power receiver is equipped with the power control function as a result of checking, the wireless power receiver may determine the amount of power that the wireless power receiver will receive in the range of the amount of available power, and may transmit the determined result to the wireless power receiver through a predetermined control command.

Of course, power redistribution may be performed within a range within which the wireless power transmitter and the wireless power receiver can operate normally and/or within a range within which normal charging is possible.

In addition, the information for identifying whether a power transmission request is permitted or denied may include a condition for permission and a reason for denial.

As an example, the permission condition may include permission granted on a condition of waiting for a certain time due to lack of available power. The reason for denial may include denial due to lack of available power, denial due to the number of wireless power receivers exceeding an acceptable number, denial due to overheating of the wireless power transmitter, and denial due to the limited class of the wireless power transmitter.

The wireless power transmitter according to an embodiment of the present disclosure may collect detailed information about permission and denial according to the power transmission request for a unit time and transmit the collected detailed information about permission and denial to a network-connected home network server and/or cloud server. Here, the collected detailed information about permission and denial may include information on at least one of the total number of times that the power transmission request is received, the total number of immediate permissions, the total number of permissions after waiting, the total number of denials due to lack of power, the number of denials due to the number of wireless power receivers exceeding the acceptable number, the number of denials due to wireless power transmitter system errors, the number of denials due to authentication failure, or the number of denials according to restricted classes.

The home network server and/or the cloud server for power management may statistically process the collected detailed permission and denial information for each wireless power transmitter, and may automatically transmit the processed statistical information to a predetermined user terminal or transmit the processed information to the corresponding user terminal according to an inquiry request from the user. The user may determine whether a wireless power transmitter is added/changed/removed, based on the received statistical information.

In another example, the home network server or the cloud server for power management may determine whether a wireless power transmitter is added/changed/removed, based on the collected detailed permission and denial information for each wireless power transmitter, and transmit a result of determination to a predetermined user terminal.

A wireless power receiver according to another embodiment of the present disclosure may support a plurality of out-of-band communication schemes. If a currently established out-of-band communication link is to be changed to another scheme, the wireless power receiver may transmit a predetermined control signal to the wireless power transmitter to request change in out-of-band communication. Upon receiving the out-of-band communication change request signal, the wireless power transmitter may release the currently established out-of-band communication link and establish a new out-of-band communication link in the out-of-band communication scheme requested by the wireless power receiver.

For example, out-of-band communication schemes applicable to the present disclosure may include at least one of NFC (Near Field Communication), RFID (Radio Frequency Identification), BLE (Bluetooth Low Energy), WCDMA (Wideband Code Division Multiple Access), LTE(Long Term Evolution)/LTE-Advanced, or Wi-Fi.

Further, communication between a wireless power transmitter applicable to the present disclosure and the home network server and/or the cloud server for power management, communication between the home network server and/or the cloud server for power management and a user terminal, and communication between the wireless power transmitters may be performed through one of a wired or wireless IP network, WCDMA (Wideband Code Division Multiple Access) communication, LTE (Long Term Evolution)/LTE-Advanced or a combination of at least one thereof, but embodiments are not limited thereto.

Hereinafter, a power transmission control mechanism in the wireless power transmitter will be described in detail.

In general, in order to simultaneously charge a plurality of wireless power receivers using one transmission coil, the wireless power transmitter may select one wireless power receiver that forms the basis of control of intensity of $I_{TX\_COIL}$ from among the plurality of wireless power receivers. Hereinafter, for simplicity, a wireless power receiver that forms the basis of power control will be referred to as a dominant power receiving unit.

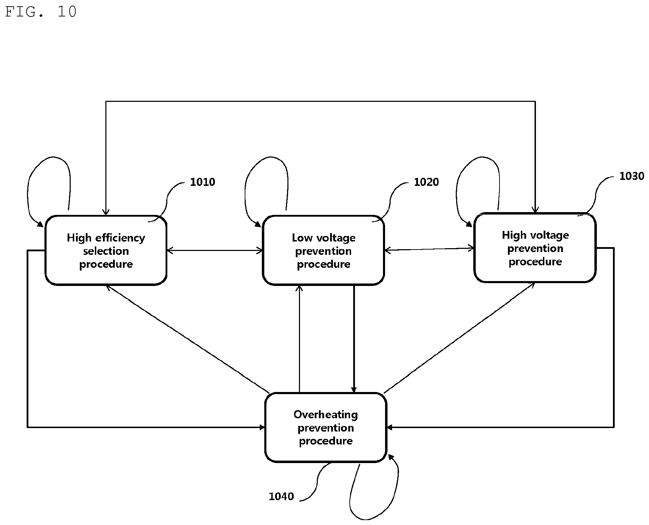

In the following description, an algorithm for selecting a dominant power receiving unit will be described in detail with reference to FIG. 10, which will be described later.

Referring to FIG. 10, the algorithm for selecting a dominant power receiving unit may be broadly composed of four sub-procedures.

Here, the four sub-procedures may include a high efficiency selection procedure 1010, a low voltage prevention procedure 1020, a high voltage prevention procedure 1030 and an overheating prevention procedure 1040.

The wireless power transmitter may selectively switch among the four sub-procedures.

Once the wireless power transmitter selects a dominant receiving unit, it may maintain the dominant receiving unit for at least a few seconds as a power control target. For example, the time to maintain the power control target may be 5 seconds, but is not limited thereto. This may prevent an unnecessary communication process in frequent switching, and may prevent a charging completion time from increasing due to unnecessary communication.

However, if the state of a specific wireless power receiver is expected to transition to an overheated state or is determined to be an overheated state when the dominant receiving unit has been selected through one of the high efficiency selection procedure 1010, the low voltage prevention procedure 1020, the high voltage prevention procedure 1030 and the overheating prevention procedure 1040, the wireless power transmitter may immediately enter the overheating prevention procedure 1040 to select the wireless power receiver as a new dominant receiving unit. Thereafter, the wireless power transmitter may perform power control in consideration of at least one of V_Rect, V_RECT_MIN, and V_RECT_HIGH of the selected dominant receiving unit such that the temperature of the dominant receiving unit falls below a predetermined reference value. This operation may prevent charging of the specific wireless power receiver from being stopped due to a system error according to overheating.

The high efficiency selection procedure 1010 may be a procedure of selecting a wireless power receiver with the highest efficiency as a dominant receiving unit. Here, the criterion for selecting the most efficient wireless power receiver may be $P_{RECT}/P_{RECT\_MAX}$, where $P_{RECT\_MAX}$ may be the maximum output power of the wireless power receiver (or the maximum output power of the rectifier of the PRU). In one example, the dominant receiving unit may be selected by comparing a preset reference value with $P_{RECT}/P_{RECT\_MAX}$. In one example, the preset reference value may be 0.75, and the wireless power transmitter may select a new dominant receiving unit only if $P_{RECT}/P_{RECT\_MAX}$ is greater than or equal to or exceeds 0.75. Thereby, waste of computing power and unnecessary waste of communication resources caused frequent replacements of the dominant receiving unit may be prevented, and the charging completion time may be prevented from being delayed.

The low voltage prevention procedure 1020 may be a procedure in which the wireless power transmitter selects a dominant receiving unit in consideration of the $V_{RECT}$ and $V_{RECT\_MIN}$ of the wireless power receivers, wherein a wireless power receiver having the smallest difference between $V_{RECT}$ and $V_{RECT\_MIN}$ among a plurality of wireless power receivers may be selected as the dominant receiving unit, and power control may be performed such that the wireless power receiver selected as the dominant receiving unit does not transition to a low voltage state. Thereby, waste of computing power and unnecessary waste of communication resources caused by frequent replacements of the dominant receiving unit may be prevented, and the charging completion time may be prevented from being delayed.

Here, the ratio of $V_{RECT}$ to $V_{RECT\_MIN}$ for each wireless power receiver (hereinafter referred to as a $V_{RECT\_LOW}$ ratio for simplicity) may be calculated by Equation 1-a given below.

$$V_{RECT\_LOW} \text{ ratio} = V_{RECT}/V_{RECT\_MIN} \text{ (Equation 1-a)}$$

A wireless power transmitter according to an embodiment may select a wireless power receiver with the lowest $V_{RECT\_LOW}$ ratio, namely, with $V_{RECT}$ closest to $V_{RECT\_MIN}$, as the dominant receiving unit.

A wireless power transmitter according to another embodiment may select a new dominant receiving unit only if the $V_{RECT\_LOW}$ ratio is less than or equal to or below a predetermined reference value. In one example, the reference value for selecting a new dominant receiving unit in the low voltage prevention procedure 1020 may be, but is not limited to, 1.25.

In another embodiment, the ratio of the difference between $V_{RECT\_MIN}$ and $V_{RECT}$ to $V_{RECT\_MIN}$ for each wireless power receiver (hereinafter referred to as a $V_{RECT\_LOW}$ ratio for simplicity) may be calculated by Equation 1-b given below.

$$V_{RECT\_LOW} \text{ ratio} = |V_{RECT\_MIN} - V_{RECT}|/V_{RECT\_MIN} \text{ (Equation 1-b)}$$

A wireless power transmitter according to an embodiment may select a wireless power receiver with the lowest $V_{RECT\_LOW}$ ratio, namely, with $V_{RECT}$ closest to $V_{RECT\_MIN}$, as the dominant receiving unit.

A wireless power transmitter according to another embodiment may select a new dominant receiving unit only if the $V_{RECT\_LOW}$ ratio is less than or equal to or below a predetermined reference value. In one example, the reference value for selecting a new dominant receiving unit in the low voltage prevention procedure 1020 may be, but is not limited to, 0.25.

The high voltage prevention procedure 1030 may be a procedure in which the wireless power transmitter selects a dominant receiving unit in consideration of the $V_{RECT}$ and $V_{RECT\_HIGH}$ of the wireless power receivers, wherein a wireless power receiver having the smallest difference between $V_{RECT}$ and $V_{RECT\_HIGH}$ among a plurality of wireless power receivers may be selected as the dominant receiving unit, and power control may be performed such that the wireless power receiver selected as the dominant receiving unit does not transition to a high voltage state. Thereby, waste of computing power and unnecessary waste of communication resources caused by frequent replacements of the dominant receiving unit may be prevented, and the charging completion time may be prevented from being delayed.

Here, the ratio of $V_{RECT}$ to $V_{RECT\_HIGH}$ for each wireless power receiver (hereinafter referred to as a $V_{RECT\_HIGH}$ ratio for simplicity) may be calculated by Equation 2-a given below.

$$V_{RECT\_HIGH} \text{ ratio} = V_{RECT}/V_{RECT\_HIGH} \text{ (Equation 2-a)}$$

A wireless power transmitter according to an embodiment may select a wireless power receiver with the highest $V_{RECT\_HIGH}$ ratio, namely, with $V_{RECT}$ closest to $V_{RECT\_HIGH}$, as the dominant receiving unit.

A wireless power transmitter according to another embodiment may enter the high voltage prevention procedure 1030 and select a new dominant receiving unit only if there is a wireless power receiver having a $V_{RECT\_HIGH}$ ratio greater than or equal to or exceeding a predetermined reference value. In one example, the reference value for selecting a new dominant receiving unit in the high voltage prevention procedure 1030 may be, but is not limited to, 0.75.

Here, the difference between $V_{RECT\_HIGH}$ and $V_{RECT}$ to $V_{RECT\_HIGH}$ for each wireless power receiver (hereinafter referred to as a $V_{RECT\_HIGH}$ ratio for simplicity) may be calculated by Equation 2 given below.

$$V_{RECT\_HIGH} \text{ ratio} = V_{RECT}/V_{RECT\_HIGH} \text{ (Equation 2-b)}$$

A wireless power transmitter according to an embodiment may select a wireless power receiver with the highest $V_{RECT\_HIGH}$ ratio, namely, with $V_{RECT}$ closest to VRECT_HIGH, as the dominant receiving unit.

A wireless power transmitter according to another embodiment may enter the high voltage prevention procedure 1030 and select a new dominant receiving unit only if there is a wireless power receiver having a $V_{RECT\_HIGH}$ ratio greater than or equal to or exceeding a predetermined reference value. In one example, the reference value for selecting a new dominant receiving unit in the high voltage prevention procedure 1030 may be, but is not limited to, 0.75.

The overheating prevention procedure 1040 is a procedure for preventing malfunction and damage due to overheating of the wireless power receivers, wherein a dominant receiving unit may be selected based on the temperature state information received from the wireless power receivers. Here, the temperature state information may include, but is not limited to, a current temperature T_Current of the corresponding wireless power receiver and a maximum temperature T_Over_Temperature_Protection at which normal operation of the corresponding wireless power receiver is possible. The temperature state information may include any information for predicting the possibility of overheating of the corresponding wireless power receiver or determining whether the corresponding wireless power receiver is overheated.

In addition, the temperature state information may be included in the static state information and the dynamic state information. In another example, the temperature state information may be transmitted in the communication connection initialization step as needed, or may be transmitted at a predetermined period or upon predetermined event occurrence.

The wireless power transmitter may calculate the temperature ratio T_Ratio to determine how close the current temperature T_Current is to the maximum temperature T_Over_Temperature_Protection based on the temperature state information about each power receiver.

Here, the temperature ratio may be calculated by Equation 3 given below.

$$\text{Temperature} \qquad \text{ratio} \qquad \text{T\_Ratio}$$

$$\text{T\_Current/T\_Over\_Temperature\_Protection (Equation 3)}$$

A wireless power receiver according to another embodiment of the present disclosure may directly calculate the temperature ratio and transmit the result of calculation to the wireless power transmitter. Regarding the time at which the temperature ratio is transmitted, the temperature ratio may be transmitted in a predetermined cycle or may be transmitted when a predetermined event occurs. In one example, the calculated temperature ratio may be transmitted to the wireless power transmitter only when the temperature ratio is greater than or equal to a predetermined reference value. In one example, the reference value for determining whether the calculated temperature ratio is transmitted may be, but is not limited to, 0.75.

The values used to calculate the $V_{RECT\_HIGH}$ rate, the $V_{RECT\_LOW}$ ratio, and the temperature ratio T_Ratio may be reporting values received from the wireless power receiver, which may be information included in the receiver static state information or the receiver dynamic state information in FIG. 9.

In another embodiment, T_Ratio may not be calculated and may be a reporting value that is directly included in and received through the receiver dynamic state information.

If there is a wireless power receiver with the calculated or received temperature ratio greater than or equal to a predetermined reference value (e.g., 0.75), the wireless power transmitter according to an embodiment may select a wireless power receiver with the highest temperature ratio as the dominant receiving unit and perform power control based on the dominant receiving unit.

In particular, if the dominant receiving unit is selected through one of the high efficiency selection procedure 1010, the low voltage prevention procedure 1020 and the high voltage prevention procedure 1030, the wireless power transmitter according to an embodiment of the present disclosure may suspend selection of a new dominant receiving unit for a predetermined time, for example, 5 seconds, after selection. However, if a wireless power receiver that is expected to be overheated is sensed during execution of one of the high efficiency selection procedure 1010, the low voltage prevention procedure 1020 and the high voltage prevention procedure 1030, the wireless power transmitter may immediately enter the overheating prevention procedure 1040 and perform power control by selecting the wireless power receiver expected to be overheated as the dominant receiving unit. At this time, if the risk of overheating is resolved through power control, for example, when the temperature ratio $T_{RATIO}$ of the dominant receiving unit drops below a predetermined reference value, the wireless power transmitter may transition to another procedure, which may be, for example, one of the high efficiency selection procedure 1010, the low voltage protection procedure 1020 and the high voltage protection procedure 1030, when the event of selecting a dominant receiving unit occurs.

As described above, overheating prevention may have the highest priority in selecting the dominant receiving unit for wireless power control in the wireless power transmitter according to an embodiment of the present disclosure. That is, a wireless power receiver expected to be overheated is sensed during execution of another procedure, which may be, for example, one of the high efficiency selection procedure 1010, the low voltage protection procedure 1020 and the high voltage protection procedure 1030, the wireless power transmitter may immediately select the wireless power receiver as the dominant receiving unit and perform power control, thereby preventing overheating.

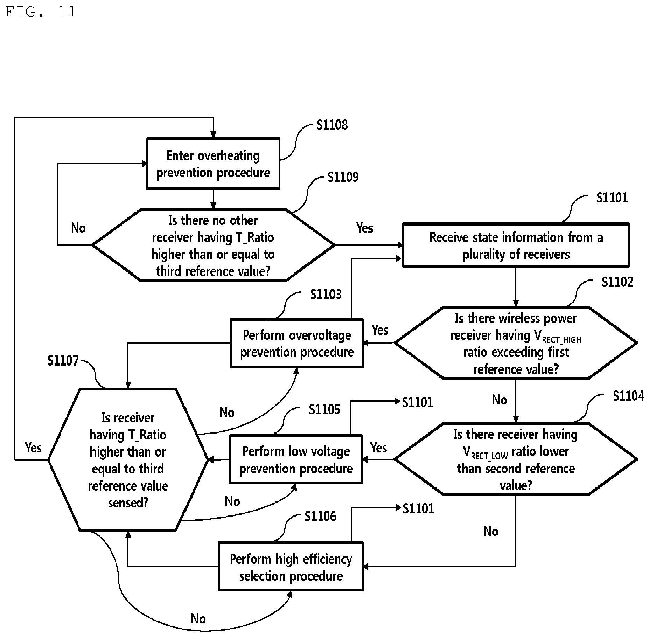

FIG. 11 is a flowchart illustrating a method of selecting a dominant receiving unit for wireless power control by a wireless power transmitter according to an embodiment of the present disclosure.

Referring to FIG. 11, the wireless power transmitter may receive state information from a plurality of wireless power receivers (S1101). Here, the receiver state information may include static state information and dynamic state information.

The wireless power transmitter may calculate the $V_{RECT\_HIGH}$ ratio based on the receiver state information and check if there is a wireless power receiver having the calculated $V_{RECT\_HIGH}$ ratio exceeding a predetermined first reference value (S1102).

If there are wireless power receivers having the ratio exceeding the first reference value as a result of checking, the wireless power transmitter may select a wireless power receiver having the highest $V_{RECT\_HIGH}$ ratio as a dominant receiving unit among the wireless power receivers exceeding the first reference value and enter an overvoltage prevention procedure to perform power control on the selected dominant receiving unit (S1103).

If there is no wireless power receiver that exceeds the first reference value as a result of checking in step 1102, the wireless power transmitter may check if there is a receiver having a $V_{RECT\_LOW}$ ratio lower than a second reference value (S1104).

If there is at least one wireless power receiver having the ratio lower than the second reference level as a result of checking, the wireless power transmitter may select a wireless power receiver with the lowest $V_{RECT\_LOW}$ ratio as the dominant receiving unit among the wireless power receivers having ratio lower than the second reference value and enter the low voltage prevention procedure to perform power control on the selected dominant receiving unit (S1105).

If there is no wireless power receiver having the ratio lower than the second reference value as a result of checking in step 1104, the wireless power transmitter may select a wireless power receiver having the highest efficiency as the dominant receiving unit and perform power control on the selected dominant receiving unit (S1106).

The wireless power transmitter may calculate a temperature ratio T_Ratio of each receiver based on the received state information or receive a calculated temperature ratio for each wireless power receiver during one of steps 1103, 1105 and 1106 (or at any time during all the procedures of FIG. 11). Then, the wireless power transmitter may check if a receiver having the temperature ratio T_Ratio higher than or equal to a predetermined third reference value is sensed (S1107). If presence of a receiver having the temperature ratio higher than or equal to the third reference value is not sensed as a result of checking, the wireless power transmitter may continue the procedure that is being performed.

On the other hand, if presence of a receiver having the temperature ratio higher than or equal to the third reference value is sensed as a result of checking in step 1107, the wireless power transmitter may select a corresponding wireless power receiver as a new dominant receiving unit and enter the overheating prevention procedure to perform power control on the new dominant receiving unit (S1108).

During the overheating prevention procedure, the wireless power transmitter may check if there is no other receiver having T_Ratio higher than or equal to the third reference value (S1109). If there is no other receiver having T_Ratio higher than or equal to the third reference value as a result of checking, the wireless power transmitter may enter step 1101 (Alternatively, step 1101 may be a step of receiving state information in a separate process, and the step next to step 1101 may be checked in consideration of the most recently received state information). On the other hand, if there is still a receiver with a T_Ratio higher rate or equal to the third reference value, namely, if the risk of overheating has not been completely eliminated, the wireless power transmitter may persistently perform step 1108. One of steps 1102 and 1103 or steps 1104 and 1105 may be operated without the other step.

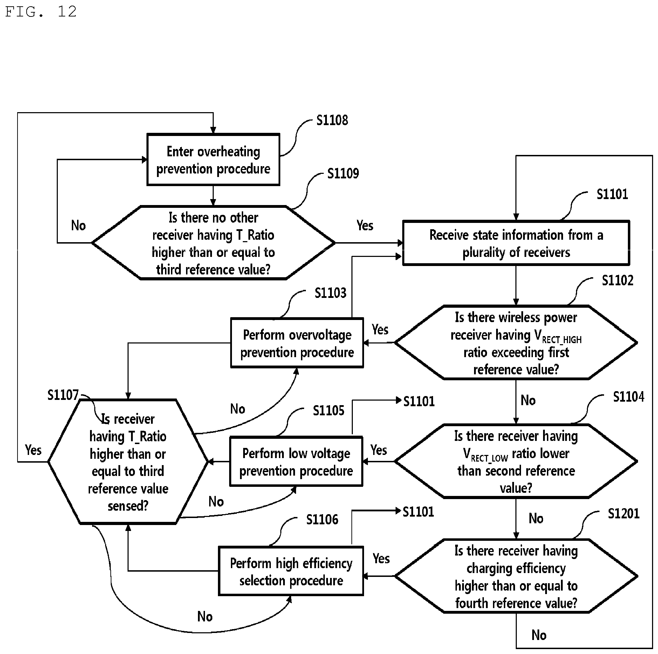

FIG. 12 is a flowchart illustrating a method of selecting a dominant receiving unit for wireless power control by a wireless power transmitter according to another embodiment of the present disclosure.

Specifically, the method of selecting a dominant receiving unit according to FIG. 12 may further include checking if there is a receiver having a charging efficiency higher than a fourth reference value, in addition to the dominant receiving unit selection method of FIG. 11 described above.

Referring to FIG. 12, if there is no receiver having a $V_{RECT\_LOW}$ ratio lower than the second reference value, the wireless power transmitter may check if there is a receiver whose calculated charging efficiency is higher than or equal to the fourth reference value (S1201). If there is at least one receiver whose charging efficiency is higher than or equal to the fourth reference value as a result of checking, the wireless power transmitter may select a receiver having the highest charging efficiency as the dominant receiving unit between the receivers and perform power control on the selected dominant receiving unit. On the other hand, if there is no receiver whose charging efficiency is higher than or equal to the fourth reference value as a result of checking, the wireless power transmitter may perform step 1101 described above.

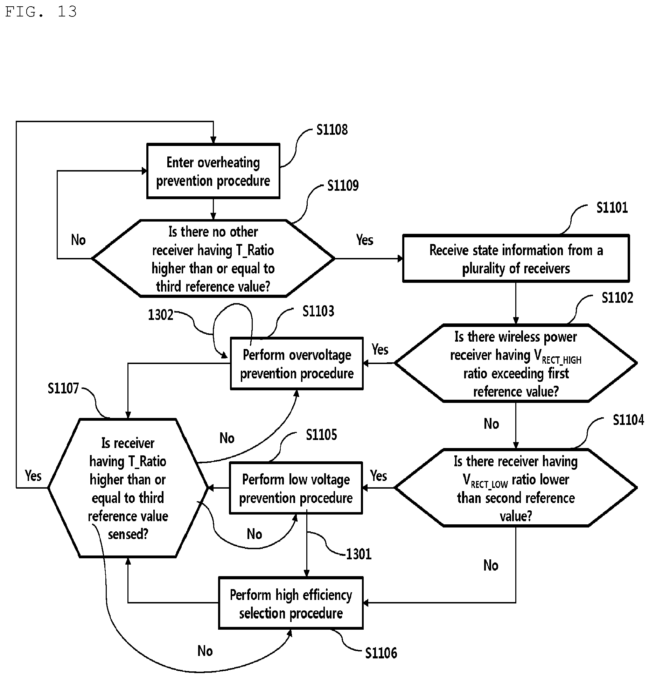

FIG. 13 is a flowchart illustrating a method of selecting a dominant receiving unit for wireless power control by a wireless power transmitter according to yet another embodiment of the present disclosure.

Referring to FIG. 13, upon determining, during execution of the low voltage prevention procedure, that the rectifier output voltage of the dominant receiving unit has been stabilized (for example, the rectifier output voltage may be determined to have been stabilized when the $V_{RECT\_LOW}$ ratio of the dominant receiving unit becomes higher than or equal to the second reference value), the wireless power transmitter may enter the high efficiency selection procedure as indicated by reference numeral 1301, select a receiver with the highest charging efficiency as a new dominant receiving unit and perform power control. To this end, step 1102 may be performed.

According to another embodiment, upon determining, during execution of the overvoltage prevention procedure, that the rectifier output voltage of the dominant receiving unit has been stabilized (for example, the rectifier output voltage may be determined to have been stabilized when the $V_{RECT\_HIGH}$ ratio of the dominant receiving unit becomes lower than or equal to the first reference value), the wireless power transmitter may perform power control on the dominant receiving unit selected for the last time while maintaining the overvoltage prevention procedure, until an event requiring selection of another dominant receiving unit as indicated by reference numeral 1302 is sensed.

According to another embodiment, the wireless power transmitter may enter the high efficiency selection procedure when a predetermined time passes after the wireless power transmitter determines, during execution of the overvoltage prevention procedure, that the rectifier output voltage of the dominant receiving unit has been stabilized (for example, if the $V_{RECT\_HIGH}$ ratio of the dominant receiving unit falls below the first reference value). Then, the wireless power transmitter may select a receiver having the highest charging efficiency as a new dominant receiving unit and perform power control therefor. To this end, step 1102 may be performed.

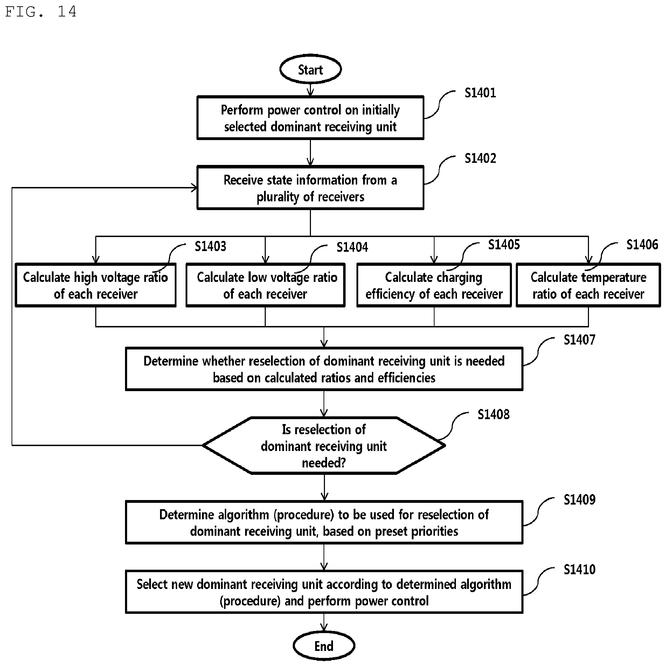

FIG. 14 is a flowchart illustrating a method of selecting a dominant receiving unit based on priorities by a wireless power transmitter according to an embodiment of the present disclosure.

A wireless power transmission system according to an embodiment of the present disclosure may charge a plurality of wireless power receivers through one wireless power transmitter. Therefore, a plurality of events requiring reselection of a dominant receiving unit may occur. As an example, suppose that the wireless power transmitter is connected to nine wireless power receivers (hereinafter referred to as first to ninth receivers), to perform the charging operation. The wireless power transmitter may calculate the charging efficiency, high voltage ratio, low voltage ratio and temperature ratio of each receiver based on the state information received from the receivers. Subsequently, the wireless power transmitter may compare the calculated result values with a predetermined reference value to select a dominant receiving unit for which power control is needed.

However, as described above, there may be a variety of events requiring selection of a new dominant receiving unit. If a plurality of events for reselection of a dominant receiving unit occurs, the wireless power transmitter needs to determine an event to form the basis of reselection of a dominant receiving unit.

As an example, if both a receiver having a high possibility of a high voltage and a receiver having a high possibility of a low voltage are sensed, the wireless power transmitter should determine which receiver to select as the dominant receiving unit. To this end, priorities for events for reselection of a dominant receiving unit may be pre-allocated and maintained by the wireless power transmitter according to the present disclosure. If plural events for reselection of a dominant receiving unit are sensed during wireless charging, the wireless power transmitter may select an algorithm (procedure) for selection of a dominant receiving unit based on the pre-stored priorities. Thereafter, the wireless power transmitter may select the dominant receiving unit according to the selected algorithm and perform power control on the selected dominant receiving unit.

As another example, if both a receiver having a high possibility of a high voltage and a receiver having a high possibility of overheating are sensed at the same time, the wireless power transmitter may select the receiver having a high possibility of overheating as the dominant receiving unit according to predefined priorities.

Hereinafter, a method of selecting a dominant receiving unit for power control based on priorities will be described in detail with reference to FIG. 14.

The wireless power transmitter may perform power control on an initially selected dominant receiving unit (S1401). Here, the initially selected dominant receiving unit may be a wireless power receiver initially connected to the corresponding wireless power transmitter, but embodiments are not limited thereto. The initially selected dominant receiving unit may be any receiver that is currently selected as the dominant receiving unit and subjected to power control.

The wireless power transmitter may receive state information from a plurality of receivers connected thereto (S1402).

The wireless power transmitter may calculate the high voltage ratio, low voltage ratio, charging efficiency, temperature ratio, and the like of each receiver based on the received state information (S1403 to S1406).

The wireless power transmitter may determine whether reselection of a dominant receiving unit is needed, based on the calculated ratios and efficiencies (S1407). Here, in order to determine whether reselection of a dominant receiving unit is needed, at least one reference value to be compared with the calculated ratios and efficiencies may be predefined. As an example, the reference value corresponding to the calculated high voltage ratios, charging efficiencies and temperature ratios may be 0.75, but is not limited thereto. On the other hand, the reference value corresponding to the calculated low voltage ratios may be 0.25, but is not limited thereto.

Once it is determined that reselection of a dominant receiving unit is needed as a result of the determination, the wireless power transmitter may determine an algorithm or a predetermined procedure to be used for reselection of a dominant receiving unit, based on preset priorities (S1408 to S1409) . Here, the algorithm may include the four sub-procedures described with reference to FIG. 10, which are the high efficiency selection procedure 1010, the low voltage prevention procedure 1020, the high voltage prevention procedure 1030 and the overheating prevention procedure 1040.

For example, the priorities of the algorithms may be defined in descending order of the overheating prevention procedure 1040, the high voltage prevention procedure 1030, the low voltage prevention procedure 1020 and the high efficiency selection procedure 1010. However, this is merely one embodiment, and it should be noted that the priorities of the algorithms may be defined differently depending on the type and characteristics of the wireless power transmitter and receivers to which the priorities are applied. For example, the priorities of the algorithms may be defined in descending order of the overheating prevention procedure 1040, the low voltage prevention procedure 1020, the high voltage prevention procedure 1030, and the high efficiency selection procedure 1010. The wireless power transmitter may select a new dominant receiving unit according to the determined algorithm or procedure and then perform power control on the selected dominant receiving unit (S1410).

It is apparent to those skilled in the art that the present disclosure may be embodied in specific forms other than those set forth herein without departing from the spirit and essential characteristics of the present disclosure. Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

The method according to embodiments of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It is apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

[Industrial Applicability]

The wireless power control device manufactured according to the present disclosure is applicable to a wireless power transmission apparatus for transmitting wireless power to a plurality of wireless power reception apparatuses.

**Claims**

1. A method of controlling wireless power in a wireless power transmitter capable of simultaneously performing wireless charging of a plurality of wireless power receivers, the method comprising:

   selecting a dominant receiver based on state information received from the plurality of wireless power receivers;
   performing power control on the dominant receiver; and
   selecting a new dominant receiver based on change in a power reception state of the dominant receiver according to the power control.

2. The method according to claim 1, further comprising:

   determining whether dominant receiver reselection is necessary based on the state information received from the plurality of wireless power receivers;
   selecting an algorithm to be used for the dominant receiver reselection when the reselection is necessary as a result of the determination; and
   selecting a new dominant receiver according to the selected algorithm and performing power control on the selected new dominant receiver

3. The method according to claim 2, wherein, when the dominant receiver is selected, the selected dominant receiver is maintained as a power control target for a predetermined time.

4. The method according to claim 2, wherein the algorithm comprises at least one of:

a high efficiency selection procedure of selecting a wireless power receiver having a highest efficiency among the plurality of wireless power receivers as a dominant receiver;

a low voltage prevention procedure of selecting the dominant receiver based on $V_{RECT}$ indicating rectifier output voltages of the wireless power receivers and $V_{RECT\_MIN}$ indicating a preset minimum rectifier output voltage; or

a high voltage prevention procedure of selecting the dominant receiver based on $V_{RECT}$ and $V_{RECT\_HIGH}$ indicating a preset maximum rectifier output voltage.

5. The method according to claim 4, wherein the high efficiency selection procedure is a procedure of selecting the dominant receiver based on a ratio of $P_{RECT}$ indicating a current rectifier output power of a corresponding wireless power receiver to $P_{RECT\_MAX}$ indicating a maximum rectifier output power of the corresponding wireless power receiver.

6. The method according to claim 4, wherein the low voltage prevention procedure is a procedure of selecting a wireless power receiver having a lowest ratio of the $V_{RECT}$ to the $V_{RECT\_MIN}$ or a ratio of the $V_{RECT}$ to the $V_{RECT\_MIN}$ lower than or equal to a predetermined reference value as the dominant receiver.

7. The method according to claim 4, wherein the high voltage prevention procedure is a procedure of selecting a dominant receiver as a wireless power receiver having a highest ratio of the $V_{RECT}$ to the $V_{RECT\_HIGH}$ or a ratio of the $V_{RECT}$ to the $V_{RECT\_HIGH}$ higher than or equal to a predetermined reference value.

8. The method according to claim 4, wherein, when overheating is expected to occur or is sensed during execution of one of the high efficiency selection procedure, the low voltage prevention procedure and the high voltage prevention procedure, an overheating prevention procedure is entered and a new dominant receiver is selected.

9. The method according to claim 8, wherein the state information comprises temperature state information,
wherein the new dominant receiver is selected based on the temperature state information.

10. The method according to claim 9, wherein the temperature state information comprises T_Current indicating a current measured temperature of the corresponding wireless power receiver and T_Over_Temperature_Protection indicating a maximum temperature allowing a normal operation of the corresponding wireless power receiver,
wherein a wireless power receiver having a highest temperature ratio of the T_Current to the T_Over_Temperature_Protection is selected as the dominant receiver.

11. The method according to claim 10, wherein, when the temperature ratio falls below a predetermined reference value according to the power control of the wireless power receiver selected as the dominant receiver, one of the high efficiency selection procedure, the low voltage prevention procedure and the high voltage prevention procedure is performed.

12. The method according to claim 6, wherein, when it is determined, during the low voltage prevention procedure, that the $V_{RECT}$ of a current dominant receiver is stabilized, the high efficiency selection procedure is entered and a new dominant receiver is selected,
wherein, when the ratio of the $V_{RECT}$ to the $V_{RECT\_MIN}$ of the current dominant receiver falls below a predetermined reference value, it is determined that the $V_{RECT}$ is stabilized.

13. The method according to claim 7, wherein, when it is determined, during the high voltage prevention procedure, that the $V_{RECT}$ of a current dominant receiver is stabilized, the high efficiency selection procedure is entered and a new dominant receiver is selected,
wherein, when the ratio of the $V_{RECT}$ to the $V_{RECT\_HIGH}$ of the current dominant receiver falls below a predetermined reference value, it is determined that the $V_{RECT}$ is stabilized.

14. The method according to claim 4, wherein when a plurality of events for the dominant receiver reselection occurs, an algorithm to be used for the dominant receiver reselection is selected based on predetermined priorities of the respective events.

FIG. 1

WIRELESS POWER RECEIVER

200

210 — RECEPTION RESONATOR

220 — RECTIFIER

230 — DC-DC CONVERTER

240 — LOAD

250 — MAIN CONTROLLER

260 — COMMUNICATION UNIT

Resonant Coupling

bi-directional half-duplex communication

WIRELESS POWER TRANSMITTER

100

140 — TRANSMISSION RESONATOR

130 — MATCHING CIRCUIT

120 — POWER CONVERSION UNIT

110 — POWER SUPPLIER

150 — MAIN CONTROLLER

160 — COMMUNICATION UNIT

FIG. 2

PTX_IN_COIL

140

TRANSMISSION
RESONATOR

210

RECEPTION
RESONATOR

FIG. 3

140

210

PRX_OUT

TRANSMISSION
RESONATOR

RECEPTION
RESONATOR

FIG. 4

FIG. 5

FIG. 6

FIG. 7

$V_{RECT}$

SYSTEM ERROR STATE — 640

$V_{RECT\_MAX}$ ---------------------------------

HIGH VOLTAGE STATE

633 —

631

OPTIMUM VOLTAGE STATE

$V_{RECT\_HIGH}$

630

ENABLE STATE

632

$V_{RECT\_MIN}$

LOW VOLTAGE STATE

620

BOOT STATE

$V_{RECT\_BOOT}$ - - - - - - - - - - -

610

DISABLE STATE

FIG. 8

FIG. 9

| WIRELESS POWER TRANSMITTER | | WIRELESS POWER RECEIVER |
|---|---|---|

Beacon sequence

Advertisement signal — S901

Connection request — S903

Receiver static state information — S905

Transmitter static state information — S907

Receiver dynamic state information — S909

Receiver dynamic state information — S911

Control command (Initiate charging) — S913

Receiver dynamic state information

Receiver dynamic state information — S915

Receiver dynamic state information
(Charging completed) — S917

FIG. 10

FIG. 11

S1108
Enter overheating prevention procedure

S1109
Is there no other receiver having T_Ratio higher than or equal to third reference value?

No

Yes

S1101
Receive state information from a plurality of receivers

S1103
Perform overvoltage prevention procedure

S1102
Is there wireless power receiver having $V_{RECT\_HIGH}$ ratio exceeding first reference value?

Yes

No

S1107
Is receiver having T_Ratio higher than or equal to third reference value sensed?

No

S1105
→ S1101
Perform low voltage prevention procedure

Yes

S1104
Is there receiver having $V_{RECT\_LOW}$ ratio lower than second reference value?

Yes

No

No

S1106
→ S1101
Perform high efficiency selection procedure

No

FIG. 12

Enter overheating prevention procedure — S1108

S1109

Is there no other receiver having T_Ratio higher than or equal to third reference value?

No

Yes

S1101

Receive state information from a plurality of receivers

S1102

S1103

Perform overvoltage prevention procedure

Yes

Is there wireless power receiver having $V_{RECT\_HIGH}$ ratio exceeding first reference value?

No

S1107

Is receiver having T_Ratio higher than or equal to third reference value sensed?

No

S1105

→S1101

Perform low voltage prevention procedure

Yes

S1104

Is there receiver having $V_{RECT\_LOW}$ ratio lower than second reference value?

No

Yes

No

S1106

→S1101

Perform high efficiency selection procedure

Yes

S1201

Is there receiver having charging efficiency higher than or equal to fourth reference value?

No

No

FIG. 13

Enter overheating
prevention procedure — S1108

Is there no other
receiver having T_Ratio
higher than or equal to
third reference value? — S1109

Receive state information from a
plurality of receivers — S1101

Perform overvoltage
prevention procedure — S1103

Is there wireless power
receiver having V_RECT_HIGH
ratio exceeding first
reference value? — S1102

Is receiver
having T_Ratio
higher than or
equal to third
reference value
sensed? — S1107

Perform low voltage
prevention procedure — S1105

Is there receiver having
V_RECT_LOW ratio lower
than second reference
value? — S1104

Perform high efficiency
selection procedure — S1106

FIG. 14

Start

Perform power control on initially
selected dominant receiving unit — S1401

Receive state information from a
plurality of receivers — S1402

| S1403 | S1404 | S1405 | S1406 |

Calculate high voltage ratio of each receiver — S1403

Calculate low voltage ratio of each receiver — S1404

Calculate charging efficiency of each receiver — S1405

Calculate temperature ratio of each receiver — S1406

Determine whether reselection of dominant receiving unit is needed
based on calculated ratios and efficiencies — S1407

Is reselection of
dominant receiving unit
needed? — S1408

Determine algorithm (procedure) to be used for reselection of
dominant receiving unit, based on preset priorities — S1409

Select new dominant receiving unit according to determined algorithm
(procedure) and perform power control — S1410

End

## INTERNATIONAL SEARCH REPORT

| International application No. |
| --- |
| **PCT/KR2016/013933** |

| A. CLASSIFICATION OF SUBJECT MATTER |
| --- |
| *H02J 7/02(2006.01)i, H02J 7/00(2006.01)i, H02J 5/00(2006.01)i* |
| According to International Patent Classification (IPC) or to both national classification and IPC |

| B. FIELDS SEARCHED |
| --- |
| Minimum documentation searched (classification system followed by classification symbols)<br>H02J 7/02; H02J 5/00; H02J 17/00; H02J 7/00 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: charging, reception, transmission, dominant, temperature, algorithm |

| C. DOCUMENTS CONSIDERED TO BE RELEVANT | | |
| --- | --- | --- |
| Category* | Citation of document, with indication, where appropriate, of the relevant passages | Relevant to claim No. |
| X | KR 10-2015-0098589 A (SAMSUNG ELECTRONICS CO., LTD.) 28 August 2015<br>See paragraphs [38], [56], [83], [142]-[157], claim 8, and figures 1, 13. | 1-14 |
| A | KR 10-2014-0017769 A (INTELLECTUAL DISCOVERY CO., LTD.) 12 February 2014<br>See paragraphs [28]-[30], and figure 1. | 1-14 |
| A | WO 2014-121296 A1 (OSSIA, INC.) 07 August 2014<br>See paragraphs [30]-[41], claim 1, and figure 1. | 1-14 |
| A | KR 10-1462992 B1 (KOREA ELECTRONICS TECHNOLOGY INSTITUTE)<br>19 November 2014<br>See paragraphs [8]-[11], and claims 1-3. | 1-14 |
| A | US 2010-0253281 A1 (LI, Peng) 07 October 2010<br>See paragraphs [62]-[68], claims 1-2, and figure 9. | 1-14 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 MARCH 2017 (13.03.2017) | **13 MARCH 2017 (13.03.2017)** |

| Name and mailing address of the ISA/KR<br>Korean Intellectual Property Office<br>Government Complex-Daejeon, 189 Seonsa-ro, Daejeon 302-701,<br>Republic of Korea<br>Facsimile No. +82-42-481-8578 | Authorized officer<br><br>Telephone No. |
| --- | --- |

Form PCT/ISA/210 (second sheet) (January 2015)

INTERNATIONAL SEARCH REPORT
Information on patent family members

International application No.

**PCT/KR2016/013933**

| Patent document cited in search report | Publication date | Patent family member | Publication date |
|---|---|---|---|
| KR 10-2015-0098589 A | 28/08/2015 | AU 2015-219706 A1 | 25/08/2016 |
| | | EP 2911265 A1 | 26/08/2015 |
| | | US 2015-0236757 A1 | 20/08/2015 |
| | | WO 2015-126158 A1 | 27/08/2015 |
| KR 10-2014-0017769 A | 12/02/2014 | KR 10-1425435 B1 | 04/08/2014 |
| WO 2014-121296 A1 | 07/08/2014 | EP 2951906 A1 | 09/12/2015 |
| | | EP 2951906 A4 | 26/10/2016 |
| | | JP 2016-512677 A | 28/04/2016 |
| | | KR 10-2016-0008160 A | 21/01/2016 |
| | | US 2014-0217967 A1 | 07/08/2014 |
| KR 10-1462992 B1 | 19/11/2014 | KR 10-1462993 B1 | 19/11/2014 |
| | | KR 10-1501485 B1 | 13/03/2015 |
| | | KR 10-2013-0073861 A | 03/07/2013 |
| | | WO 2013-095065 A1 | 27/06/2013 |
| US 2010-0253281 A1 | 07/10/2010 | CN 102440037 A | 02/05/2012 |
| | | CN 102440037 B | 01/07/2015 |
| | | EP 2417806 A2 | 15/02/2012 |
| | | JP 2012-523813 A | 04/10/2012 |
| | | JP 5681167 B2 | 04/03/2015 |
| | | KR 10-2012-0005484 A | 16/01/2012 |
| | | TW 201108550 A | 01/03/2011 |
| | | US 8970180 B2 | 03/03/2015 |
| | | WO 2010-118161 A2 | 14/10/2010 |
| | | WO 2010-118161 A3 | 14/04/2011 |

Form PCT/ISA/210 (patent family annex) (January 2015)